# EUROPÄISCHE PATENTSCHRIFT

(11) **EP 3 665 218 B1**
(45) Veröffentlichungstag und Bekanntmachung des Hinweises auf die Patenterteilung: **02.04.2025**
(21) Anmeldenummer: 18752739.5
(22) Anmeldetag: 08.08.2018
(51) Int. Cl.: C08K 3/32, C08K 5/3492, C08K 5/5313, C08K 5/5317, C08K 7/14, C08L 77/06, C08L 67/02, C08L 77/02, C08K 5/134, C08K 5/526, C08K 5/5393

(54) **FLAMMHEMMENDE POLYAMIDZUSAMMENSETZUNGEN UND DEREN VERWENDUNG**
FLAME-RETARDANT POLYAMIDE COMPOSITIONS AND USE THEREOF
COMPOSITIONS DE POLYAMIDE IGNIFUGES ET LEUR UTILISATION

(30) Priorität: 11.08.2017 DE 102017214045
(43) Veröffentlichungstag der Anmeldung: 17.06.2020
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Clariant Produkte (Deutschland) GmbH
(86) Internationale Anmeldenummer: PCT/EP2018/071443
(87) Internationale Veröffentlichungsnummer: WO 2019/030250

(56) Entgegenhaltungen:
- EP-A1- 1 544 206
- EP-A1- 1 544 206
- WO-A1-2012/045414
- WO-A1-2012/045414
- DE-A1- 102014 001 222
- DE-A1- 102014 001 222

## Beschreibung

Die vorliegende Erfindung betrifft flammhemmende Polyamidzusammensetzungen sowie daraus hergestellte Formteile.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugt - auch aus ökologischen Gründen - werden nicht-halogenierte Flammschutzmittelsysteme eingesetzt, die nur geringe oder keine Rauchgase bilden.

Unter diesen Flammschutzmitteln haben sich die Salze von Phosphinsäuren (Phosphinate) als besonders für thermoplastische Polymere wirksam erwiesen (DE 2 252 258 A und DE 2 447 727 A).

Darüber hinaus sind synergistische Kombinationen von Phosphinaten mit bestimmten stickstoffhaltigen Verbindungen bekannt, die in einer ganzen Reihe von Polymeren als Flammschutzmittel effektiver wirken, als die Phosphinate allein (WO-2002/28953 A1 sowie DE 197 34 437 A1 und DE 197 37 727 A1).

Aus der US 7,420,007 B2 ist bekannt, dass Dialkylphosphinate enthaltend eine geringe Menge an ausgewählten Telomeren als Flammschutzmittel für Polymere geeignet sind, wobei das Polymere bei der Einarbeitung des Flammschutzmittels in die Polymermatrix nur einem recht geringen Abbau unterliegt.

Die DE 102915001222 A1 beschreibt eine halogenfreie Flammschutzmittelmischung, enthaltend 1 bis 99 Gew.-% einer Komponente A und 1 bis 99 Gew.-% einer Komponente B, wobei Komponente A 85 bis 99,995 Gew.-% eines festen Diethylphosphinsäuresalzes und 0,005 bis 15 Gew.-% nicht-brennbare Zusätze enthält und es sich bei der Komponente B um Aluminiumphosphit handelt.

Hierbei wird eine Flammschutzmittelmischung mit gleichmäßiger Rieselfähigkeit zur Verfügung gestellt, die Prozessstörungen bei der Herstellung von flammgeschützten Polymerformmassen vermeiden soll und bei der keine zusätzlichen Bindemittel notwendig sind.

Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel, vor allem bei höheren Dosierungen, die Verarbeitungsstabilität von Kunststoffen beeinträchtigen. Es kann zu verstärktem Polymerabbau, zu Vernetzungsreaktionen, zu Ausgasungen oder Verfärbungen kommen.

Aus der WO 2014/135256 A1 sind Polyamid-Formmassen bekannt, die eine deutlich verbesserte thermische Stabilität, eine verringerte Migrationsneigung sowie ein gute elektrische und mechanische Eigenschaften aufweisen.

Bislang fehlt es jedoch an flammgeschützten phosphinathaltigen Polyamidzusammensetzungen die alle geforderten Eigenschaften gleichzeitig erreichen, wie eine gute Fließfähigkeit, gute elektrische Werte sowie einen effektiven Flammschutz, wobei gleichzeitig keine Verfärbungstendenzen auftreten.

Es war daher Aufgabe der vorliegenden Erfindung, flammgeschützte Polyamidzusammensetzungen auf Basis phosphinathaltiger Flammschutzsysteme zur Verfügung zu stellen, die alle vorgenannten Eigenschaften gleichzeitig aufweisen und die insbesondere eine gute Fließfähigkeit (MVR), gute elektrische Werte (GWFI, CTI) sowie einen effektiven Flammschutz (UL94), wobei gleichzeitig keine Verfärbungstendenzen (Farbe) auftreten.

### Gegenstand der Erfindung sind daher flammhemmende

Polyamidzusammensetzungen, enthaltend
- 25 bis 95 Gew.-% thermoplastisches Polyamid mit einem Schmelzpunkt von kleiner gleich 290 °C, bestimmt mittels Diffential-Scanning-Kalorimetrie (DSC) bei einer Aufheizrate von 10 K/Sekunde, vorzugsweise von kleiner gleich 280 °C und ganz besonders bevorzugt von kleiner gleich 250 °C, als Komponente A,
- 1 bis 45 Gew.-% Füllstoffe und/oder Verstärkungsstoffe, vorzugsweise Glasfasern, als Komponente B,
- 1 bis 35 Gew.-% Phosphinsäuresalz der Formel (I) als Komponente C 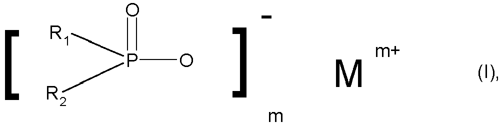
   worin R₁ und R₂ Ethyl bedeuten,
   M Al, Fe, TiOₚ oder Zn ist,
   m 2 bis 3, vorzugsweise 2 oder 3, bedeutet, und
   p = (4 - m) / 2 ist
- 0,01 bis 3 Gew.-% einer Verbindung ausgewählt aus der Gruppe der Al-, Fe-, TiOₚ- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- 0,001 bis 1 Gew.-% Phosphonsäuresalz der Formel II als Komponente E 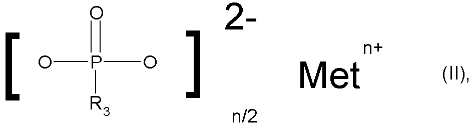
   worin R₃ Ethyl bedeutet,
   Met Al, Fe, TiO_{q} oder Zn ist,
   n 2 bis 3, vorzugsweise 2 oder 3, bedeutet, und
   q = (4 - n) / 2 ist
- 1 bis 25 Gew.-% Melaminpolyphosphat mit einem mittleren Kondensationsgrad von 20 bis 200 als Komponente F,
- 0,05 bis 5 Gew.-% sterisch gehindertes phenolisches Antioxidans als Komponente G, und/oder
- 0,05 bis 5 Gew.-% organisches Phosphit und/oder organisches Phosphonit als Komponente H, und
- 0,005 bis 10 Gew.-% anorganisches Phosphonat als weitere Komponente I, wobei die Prozentangaben sich auf die Gesamtmenge der Polyamidzusammensetzung beziehen.

### Ganz besonders bevorzugt werden flammhemmende

Polyamidzusammensetzungen, in denen M und Met Al bedeuten, m und n 3 sind und in denen die Verbindungen der Komponente D als Aluminiumsalze vorliegen.

In der erfindungsgemäßen Polyamidzusammensetzung beträgt der Anteil an Komponente A 25 bis 95 Gew.-%, vorzugsweise 25 bis 75 Gew.-%.

In der erfindungsgemäßen Polyamidzusammensetzung beträgt der Anteil an Komponente B 1 bis 45 Gew.-%, vorzugsweise 20 bis 40 Gew.-%.

In der erfindungsgemäßen Polyamidzusammensetzung beträgt der Anteil an Komponente C 1 bis 35 Gew.-%, vorzugsweise 5 bis 20 Gew.-%.

In der erfindungsgemäßen Polyamidzusammensetzung beträgt der Anteil an Komponente D 0,01 bis 3 Gew.-%, vorzugsweise 0,05 bis 1,5 Gew.-%.

In der erfindungsgemäßen Polyamidzusammensetzung beträgt der Anteil an Komponente E 0,001 bis 1 Gew.-%, vorzugsweise 0,01 bis 0,6 Gew.-%.

In der erfindungsgemäßen Polyamidzusammensetzung beträgt der Anteil an Komponente F 1 bis 25 Gew.-%, vorzugsweise 2 bis 10 Gew.-%.

In der erfindungsgemäßen Polyamidzusammensetzung beträgt der Anteil an Komponente G 0,01 bis 5 Gew.-%, vorzugsweise 0,5 bis 1 Gew.-%.

In der erfindungsgemäßen Polyamidzusammensetzung beträgt der Anteil an Komponente H 0,01 bis 5 Gew.-%, vorzugsweise 0,5 bis 1 Gew.-%.

Dabei beziehen sich die Prozentangaben für die Anteile der Komponenten A bis G auf die Gesamtmenge der Polyamidzusammensetzung.

Besonders bevorzugt werden flammhemmende Polyamidzusammensetzungen bei denen
- der Anteil von Komponente A 25 bis 75 Gew.-%,
- der Anteil von Komponente B 20 bis 40 Gew.-%,
- der Anteil von Komponente C 5 bis 20 Gew.-%,
- der Anteil von Komponente D 0,05 bis 1,5 Gew.-%,
- der Anteil von Komponente E 0,01 bis 0,6 Gew.-%,
- der Anteil von Komponente F 2 bis 10 Gew.-%,
- der Anteil von Komponente G 0,1 bis 1 Gew.-%, und
- der Anteil von Komponente H 0,1 bis 1 Gew.-% beträgt.

### Bevorzugt sind erfindungsgemäße flammhemmende

Polyamidzusammensetzungen, die einen Comparative Tracking Index, gemessen nach dem International Electrotechnical Commission Standard IEC-60112/3, von größer als 500 Volt aufweisen.

### Ebenfalls bevorzugte erfindungsgemäße flammhemmende

Polyamidzusammensetzungen erreichen eine Bewertung von V0 nach UL-94, insbesondere gemessen an Formteilen von 3,2 mm bis 0,4 mm Dicke.

### Weitere bevorzugte erfindungsgemäße flammhemmende

Polyamidzusammensetzungen weisen einen Glow Wire Flammability Index nach IEC-60695-2-12 von mindestens 960 °C auf, insbesondere gemessen an Formteilen von 0,75 - 3 mm Dicke.

Bevorzugt werden flammhemmende Polyamidzusammensetzungen, bei denen als Komponente A ein oder mehrere Polyamide ausgewählt ist aus der Gruppe bestehend aus PA 6, PA 6.6, PA 4.6, PA 12, PA 6.10 eingesetzt werden.

Besonders bevorzugt werden flammhemmende Polyamidzusammensetzungen, bei denen als Komponente A Polyamid 6.6 oder Polymer-Gemische aus Polyamid 6.6 und Polyamid 6 eingesetzt werden.

### Ganz besonders bevorzugt werden flammhemmende

Polyamidzusammensetzungen, bei denen Komponente A zu mindestens 75 Gew.-% aus Polyamid 6.6 und zu höchstens 25 Gew.-% aus Polyamid 6 besteht.

Bevorzugt werden als Komponente B Glasfasern eingesetzt.

In einer bevorzugten Ausführungsform liegen Komponenten C, D, E und F in Teilchenform vor, wobei die mittlere Teilchengröße (d₅₀) 1 bis 100 µm beträgt.

Bevorzugt weist das Melaminpolyphosphat eine Zersetzungstemperatur von größer gleich 320 °C auf.

Bevorzugt wird die Komponente G ausgewählt aus der Gruppe bestehend aus alkylierten Monophenolen, sterisch gehinderten Alkylthiomethylphenolen, sterisch gehinderten hydroxylierten Thiodiphenylethern, sterisch gehinderten Alkyliden-Bisphenolen, sterisch gehinderten Benzylphenolen, sterisch gehinderten hydroxybenzylierten Malonaten, sterisch gehinderten Hydroxybenzyl-Aromaten, sterisch gehinderten phenolischen Triazinverbindungen, sterisch gehinderten phenolischen Benzylphosphonaten, N-(3,5-di-tert-butyl-4-hydroxyphenyl)-carbaminsäurealkylestern, Estern der β-(3.5-Di-tert-butyl-4-hydroxyphenyl)-propionsäure mit ein- oder mehr-wertigen Alkoholen, Estern der β-(5-tert-Butyl-4-hydroxy-3-methylphenyl)-propionsäure mit ein- oder mehrwertigen Alkoholen, Estern der β-(3,5-Dicyclohexyl-4-hydroxyphenyl)-propionsäure mit ein- oder mehrwertigen Alkoholen, Estern der 3,5-Di-tert-butyl-4-hydroxyphenylessigsäure mit ein- oder mehrwertigen Alkoholen oder Amiden der β-(3,5-Di-tert-butyl-4-hydroxyphenyl)-propionsäure.

Bevorzugt ist Komponente H ein Triarylphosphit ist, insbesondere Tris(2,4-di-tert.butylphenyl)-phosphit.

Bevorzugt ist Komponente G N, N'-Bis[3-(3',5'di-tert-butyl-4'-hydroxyphenyl)propionyl]-hexamethylendiamin ist und Komponente H ist Tris(2,4-di-tert-butylphenyl)phosphit.

Bevorzugt ist, dass Komponente H ein 1,1-Biphenyl-4,4'-diylbisphosphonit ist, insbesondere Tetrakis(2,4-di-tert-butylphenyl)-[1,1-biphenyl]-4,4'-diylbisphosphonit.

Bevorzugt ist, dass Komponente G N, N'-Bis[3-(3',5'di-tert-butyl-4'-hydroxyphenyl)propionyl]-hexamethylendiamin ist und dass Komponente H Tetrakis(2,4-di-tert-butylphenyl)-[1,1-biphenyl]-4,4'-diylbisphosphonit ist.

Schließlich betrifft die vorliegende Erfindung auch die Verwendung der Polyamidzusammensetzungen nach einem der Ansprüche 1 bis 26 zur Herstellung von Fasern, Folien und Formkörpern, insbesondere für Anwendungen im Elektro- und Elektronikbereich.

Bevorzugt eingesetzte Salze der Komponente C sind solche, worin M^{m+} Zn²⁺, Fe³⁺ oder insbesondere Al³⁺ bedeuten.

Bevorzugt eingesetzte Salze der Komponente D sind Zink-, Eisen- oder insbesondere Aluminiumsalze.

Bevorzugt eingesetzte Salze der Komponente E sind solche, worin Metⁿ⁺ Zn²⁺, Fe³⁺ oder insbesondere Al³⁺ bedeuten.

Die erfindungsgemäßen flammhemmenden Polyamidzusammensetzungen enthalten anorganisches Phosphonat als weitere Komponente I.

Die Verwendung der erfindungsgemäß als Komponente I eingesetzten anorganischen Phosphonate oder auch Salze der phosphorigen Säure (Phosphite) als Flammschutzmittel ist bekannt. So offenbart WO 2012/045414 A1 Flammschutzmittelkombinationen, die neben Phosphinsäuresalzen auch Salze der phosphorigen Säure (= Phosphite) enthalten.

Bevorzugt entspricht das anorganische Phosphonat (Komponente I) den allgemeinen Formeln (IV) oder (V)

[(HO)PO₂]²⁻_{p/2} Kat^{p+} (IV)

[(HO)₂PO]⁻ₚ Kat^{p+} (V)

worin Kat ein p-wertiges Kation, insbesondere ein Kation eines Alkalimetalls, Erdalkalimetalls, ein Ammoniumkation und/oder ein Kation von Fe, Zn oder insbesondere von Al einschließlich der Kationen Al(OH) oder Al(OH)₂ ist, und p 1, 2, 3 oder 4 bedeutet.

Bevorzugt handelt es sich bei dem anorganischen Phosphonat (Komponente I) um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)³*xAl₂O₃*nH₂O mit x = 2,27 - 1 und/oder Al₄HeP₁₆O₁₈.

Bei dem anorganischen Phosphonat (Komponente I) handelt es sich bevorzugt auch um Aluminiumphosphite der Formeln (VI), (VII) und/oder (VIII)

Al₂(HPO₃)₃ x (H₂O)_{q} (VI),

wobei q 0 bis 4 bedeutet,

Al_{2,00}M_{z}(HPO₃)_{y}(OH)ᵥ x (H₂O)_{w} (VII),

wobei M Alkalimetallkationen, z 0,01 bis 1,5 und y 2,63 bis 3,5 und v 0 bis 2 und w 0 bis 4 bedeutet,

Al_{2,00}(HPO₃)ᵤ(H₂PO₃)ₜ x (H₂O)ₛ (VIII),

wobei u 2 bis 2,99 und t 2 bis 0,01 und s 0 bis 4 bedeutet,
   und/oder
um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1 und/oder Al₄HₑP₁₆O₁₈.

Bevorzugte anorganische Phosphonate (Komponente I) sind in Wasser unlösliche bzw. schwerlösliche Salze.

Besonders bevorzugte anorganische Phosphonate sind Aluminium-, Calcium- und Zinksalze.

Besonders bevorzugt handelt es sich bei Komponente F um ein Umsetzungsprodukt aus phosphoriger Säure und einer Aluminiumverbindung.

Besonders bevorzugte Komponenten F sind Aluminiumphosphite mit den CAS-Nummern 15099-32-8, 119103-85-4, 220689-59-8, 56287-23-1, 156024-71-4, 71449-76-8 und 15099-32-8.

Die Herstellung der bevorzugt eingesetzten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit.

Bevorzugtes Dinatriumphosphithydrat ist ^{®}Brüggolen H10 der Fa. Brüggemann. Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdiethylphosphinat zusammen mit Aluminiumphosphit oder Zinkdiethylphosphinat zusammen mit Zinkphosphit.

In einer bevorzugten Ausführungsform enthalten die oben beschriebenen flammhemmenden Polyamidzusammensetzungen als Komponente I eine Verbindung der Formel (III) 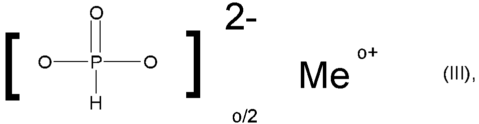
worin Me Fe, TiOᵣ, Zn oder insbesondere Al ist,
o 2 bis 3, vorzugsweise 2 oder 3, bedeutet, und
r = (4 - o) / 2 ist.

Bevorzugt eingesetzte Verbindungen der Formel III sind solche, worin Me^{o+} Zn²⁺, Fe³⁺ oder insbesondere Al³⁺ bedeuten.

Komponente I liegt in einer Menge von 0,005 bis 10 Gew.-%, insbesondere in einer Menge von 0,02 bis 5 Gew.-%, bezogen auf die Gesamtmenge der Polyamidzusammensetzung, vor.

Die erfindungsgemäßen Polyamidzusammensetzungen enthalten als Komponente A ein oder mehrere thermoplastische Polyamide mit einem Schmelzpunkt von kleiner gleich 290 °C. Der Schmelzpunkt wird dabei mittels Diffential-Scanning-Kalorimetrie (DSC) bei einer Aufheizrate von 10 K/Sekunde bestimmt.

Bei den thermoplastischen Polyamiden der Komponente A handelt es sich in der Regel um Homo- oder Copolyamide, die sich von (cyclo)aliphatischen Dicarbonsäuren oder deren polyamidbildenden Derivaten, wie deren Salzen, und von (cyclo)aliphatischen Diaminen oder von (cyclo)aliphatischen Aminocarbonsäuren oder deren polyamidbildenden Derivaten, wie deren Salzen, ableiten.

Bei den erfindungsgemäß als Komponente A eingesetzten Polyamiden handelt es sich um thermoplastische Polyamide.

Unter thermoplastischen Polyamiden werden in Anlehnung an Hans Domininghaus in "Die Kunststoffe und ihre Eigenschaften", 5. Auflage (1998), Seite 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind. Die erfindungsgemäß als Komponente A eingesetzten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet. Geeignet sind auch Gemische mit Anteilen von anderen Polymeren, bevorzugt von Polyethylen, Polypropylen, ABS, wobei gegebenenfalls ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es sich wie hier um glasfaserverstärkte Polyamide handelt. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A einzusetzende Polyamide sind teilkristalline aliphatische Polyamide, die ausgehend von aliphatischen Diaminen und aliphatischen Dicarbonsäuren und/oder cycloaliphatischen Lactamen mit wenigstens 5 Ringgliedern oder entsprechenden Aminosäuren hergestellt werden können.

Als Edukte kommen aliphatische Dicarbonsäuren, bevorzugt Adipinsäure, 2,2,4- und 2,4,4-Trimethyladipinsäure, Azelainsäure und/oder Sebazinsäure, aliphatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Aminocarbonsäuren, bevorzugt Aminocapronsäure oder die entsprechenden Lactame in Betracht. Copolyamide aus mehreren der genannten Monomeren sind eingeschlossen. Besonders bevorzugt werden Caprolactame, ganz besonders bevorzugt wird ε-Caprolactam eingesetzt.

Bevorzugt handelt es sich bei den erfindungsgemäß eingesetzten aliphatischen Homo- oder Copolyamiden um Polyamid 12, Polyamid 4, Polyamid 4.6, Polyamid 6, Polyamid 6.6, Polyamid 6.9, Polyamid 6.10, Polyamid 6.12, Polyamid 6.66, Polyamid 7.7, Polyamid 8.8, Polyamid 9.9, Polyamid 10.9, Polyamid 10.10, Polyamid 11 oder Polyamid 12. Diese sind z. B. unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Besonders geeignet sind weiterhin auf PA6, PA6.6 und anderen aliphatischen Homo- oder Copolyamiden basierende Compounds, bei denen auf eine Polyamidgruppe in der Polymerkette 3 bis 11 Methylengruppen kommen.

Als Komponente B werden Füllstoffe und/oder Verstärkungsstoffe eingesetzt, bevorzugt Glasfasern. Es können auch Mischungen aus zwei oder mehreren unterschiedlichen Füllstoffen und/oder Verstärkungsstoffen, eingesetzt werden.

Bevorzugte Füllstoffe sind mineralische teilchenförmige Füllstoffe auf der Basis von Talk, Glimmer, Silikat, Quarz, Titandioxid, Wollastonit, Kaolin, amorphe Kieselsäuren, nanoskaligen Mineralien, besonders bevorzugt Montmorilloniten oder Nano-Böhmiten, Magnesiumcarbonat, Kreide, Feldspat,Glaskugeln und/oder Bariumsulfat. Besonders bevorzugt werden mineralische teilchenförmige Füllstoffe auf der Basis von Talk, Wollastonit und/oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt sind nadelförmige Wollastonite. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß als Komponente B eingesetzten nadelförmigen mineralischen Füllstoffe liegt bevorzugt bei kleiner 20 µm, besonders bevorzugt bei kleiner 15 µm, insbesondere bevorzugt bei kleiner 10 µm, bestimmt mit einem CILAS Granulometer.

Bei den erfindungsgemäß vorzugsweise eingesetzten Komponenten B handelt es sich um Verstärkungsstoffe. Dabei kann es sich beispielsweise um Verstärkungsstoffe auf der Basis von Kohlenstofffasern und/oder von Glasfasern handeln.

Der Füllstoff und/oder Verstärkungsstoff kann in einer bevorzugten Ausführungsform oberflächenmodifiziert sein, vorzugsweise mit einem Haftvermittler bzw. einem Haftvermittlersystem, besonders bevorzugt auf Silanbasis. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Bei den erfindungsgemäß als Komponente B bevorzugt eingesetzten Glasfasern kann es sich um Kurzglasfasern und/oder um Langglasfasern handeln. Als Kurz- oder Langglasfasern können Schnittfasern eingesetzt werden. Kurzglasfasern können auch in Form von gemahlenen Glasfasern zum Einsatz kommen. Daneben können Glasfasern außerdem in der Form von Endlosfasern eingesetzt werden, beispielsweise in der Form von Rovings, Monofilamenten, Filamentgarnen oder Zwirnen, oder Glasfasern können in der Form von textilen Flächengebilden eingesetzt werden, beispielsweise als Glasgewebe, als Glasgeflecht oder als Glasmatte.

Typische Faserlängen für Kurzglasfasern vor dem Einarbeiten in die Polyamidmatrix bewegen sich im Bereich von 0,05 bis 10 mm, vorzugsweise von 0,1 bis 5 mm. Nach dem Einarbeiten in die Polyamidmatrix hat sich die Länge der Glasfasern verringert. Typische Faserlängen für Kurzglasfasern nach dem Einarbeiten in die Polyamidmatrix bewegen sich im Bereich von 0,01 bis 2 mm, vorzugsweise von 0,02 bis 1 mm.

Die Durchmesser der einzelnen Fasern kann in weiten Bereichen schwanken. Typische Durchmesser der einzelnen Fasern bewegen sich im Bereich von 5 bis 20 µm.

Die Glasfasern können beliebige Querschnittsformen aufweisen, beispielsweise runde, elliptische, n-eckige oder irreguläre Querschnitte. Es können Glasfasern mit mono- oder multilobalen Querschnitten verwendet werden.

Glasfasern können als Endlosfasern oder als geschnittene oder gemahlene Glasfasern eingesetzt werden.

Die Glasfasern selbst, unabhängig von deren Querschnittfläche und deren Länge, können dabei beispielsweise ausgewählt sein aus der Gruppe der E-Glasfasern, A-Glasfasern, C-Glasfasern, D-Glasfasern, M-Glasfasern, S-Glasfasern, R-Glasfasern und/oder ECR-Glasfasern, wobei die E-Glasfasern, R-Glasfasern, S-Glasfasern und ECR-Glasfasern besonders bevorzugt sind. Die Glasfasern sind vorzugsweise mit einer Schlichte versehen, welche vorzugsweise Polyurethan als Filmbildner und Aminosilan als Haftvermittler enthält.

Besonders bevorzugt eingesetzte E-Glasfasern weisen folgende chemische Zusammensetzung auf: SiO₂ 50-56 %; Al₂O₃ 12-16 %; CaO 16-25 %; MgO ≤ 6 %; B₂O₃ 6-13 %; F ≤ 0,7 %; Na₂O 0,3-2 %; K₂O 0,2-0,5 %; Fe₂O₃ 0,3 %.

Besonders bevorzugt eingesetzte R-Glasfasern weisen folgende chemische Zusammensetzung auf: SiO₂ 50-65 %; Al₂O₃ 20-30 %; CaO 6-16 %; MgO 5-20 %; Na₂O 0,3-0,5 %; K₂O 0,05-0,2 %; Fe₂O₃ 0,2-0,4 %, TiO₂ 0,1-0,3 %.

Besonders bevorzugt eingesetzte ECR-Glasfasern weisen folgende chemische Zusammensetzung auf: SiO₂ 57,5-58,5 %; Al₂O₃ 17,5-19,0 %; CaO 11,5-13,0 %; MgO 9,5-11,5.

Die erfindungsgemäß als Komponente C eingesetzten Salze von Diethylphosphinsäure sind bekannte Flammschutzmittel für polymere Formmassen.

Auch Salze von Diethylphosphinsäure mit Anteilen der erfindungsgemäß als Komponenten D und E eingesetzten Phosphinsäure- und Phosphonsäuresalze sind bekannte Flammschutzmittel. Die Herstellung dieser Stoffkombinationen wird z. B. in US 7,420,007 B2 beschrieben.

Die erfindungsgemäß eingesetzten Salze von Diethylphosphinsäure der Komponente C können geringe Mengen an Salzen der Komponente D und an Salzen der Komponente E enthalten, beispielsweise bis zu 10 Gew.-% an Komponente D, vorzugsweise 0,01 bis 6 Gew. %, und insbesondere 0,2 bis 2,5 Gew.-% davon, und bis zu 10 Gew.-% an Komponente E, vorzugsweise 0,01 bis 6 Gew. %, und insbesondere 0,2 bis 2,5 Gew.-% davon bezogen auf die Menge an Komponenten C, D und E.

Die erfindungsgemäß als Komponente E eingesetzten Salze der Ethylphosphonsäure sind als Zusätze zu Diethylphosphinaten in Flammschutzmitteln für polymere Formmassen ebenfalls bekannt, beispielsweise aus WO 2016/065971 A1.

Auch die Verwendung der erfindungsgemäß als Komponente F eingesetzten Polyphosphatderivate von Melamin mit einem Kondensationsgrad von größer gleich 20 als Flammschutzmittel ist bekannt. So offenbart die DE 10 2005 016 195 A1 ein stabilisiertes Flammschutzmittel enthaltend 99 bis 1 Gew.-% Melaminpolyphosphat und 1 bis 99 Gew.-% Additiv mit Reservealkalität. In diesem Dokument wird auch offenbart, dass dieses Flammschutzmittel mit einer Phosphinsäure und/oder einem Phosphinsäuresalz kombiniert werden kann.

Die erfindungsgemäßen flammhemmenden Polyamidzusammensetzungen enthalten als Komponente F ein Melaminpolyphosphat, dessen durchschnittlicher Kondensationsgrad 20 bis 200, insbesondere von 40 bis 150, beträgt.

In einem anderen bevorzugten Bereich beträgt der durchschnittliche Kondensationsgrad 20 bis 100.

### Weitere bevorzugte erfindungsgemäße flammhemmende

Polyamidzusammensetzungen enthalten als Komponente F ein Melaminpolyphosphat, das eine Zersetzungstemperatur von größer gleich 320 °C, insbesondere von größer gleich 360 °C und ganz besonders bevorzugt von größer gleich 400 °C aufweist.

Bevorzugt werden als Komponente F Melaminpolyphosphate eingesetzt, die aus WO 2006/027340 A1 (entsprechend EP 1 789 475 B1) und WO 2000/002869 A1 (entsprechend EP 1 095 030 B1) bekannt sind.

Bevorzugt werden Melaminpolyphosphate eingesetzt, deren durchschnittlicher Kondensationsgrad zwischen 20 und 200, insbesondere zwischen 40 und 150 liegt, und deren Melamingehalt 1,1 bis 2,0 mol, insbesondere 1,2 bis 1,8 mol pro Mol Phosphoratom beträgt.

Ebenfalls bevorzugt werden Melaminpolyphosphate eingesetzt, deren mittlerer Kondensationsgrat (Zahlenmittel) >20 ist, deren Zersetzungstemperatur größer als 320 °C ist, deren Molverhältnis von 1,3,5-Triazinverbindung zu Phosphor kleiner als 1,1, insbesondere 0,8 bis 1,0 beträgt und deren pH-Wert einer 10 %-igen Aufschlämmung in Wasser bei 25 °C 5 oder höher ist, vorzugsweise 5,1 bis 6,9.

Bei den erfindungsgemäß als Komponente G zugesetzten sterisch gehinderten Phenolen handelt es sich um an sich bekannte Antioxidantien.

Bevorzugt als Komponente G eingesetzte Antioxidantien sind alkylierte Monophenole, z. B. 2,6-Di-tert-butyl-4-methylphenol oder 2,6-Di-tert.-butyl-4-methoxyphenol ; sterisch gehinderte Alkylthiomethylphenole, z. B. 2,4-Di-octylthiomethyl-6-tert.-butylphenol, sterisch gehinderte hydroxylierte Thiodiphenylether, z. B. 2,2'-Thio-bis(6-tert-butyl-4-methylphenol), 4,4'-Thio-bis-(6-tert-butyl-3-methyl-phenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfid; sterisch gehinderte Alkyliden-Bisphenole, z. B. 2,2'-Methylen-bis-(6-tert-butyl-4-methylphenol; sterisch gehinderte Benzylphenole, z. B. 3,5,3',5'-Tetra-tert-butyl-4,4'-dihydroxydibenzylether; sterisch gehinderte hydroxybenzylierte Malonate, z B. Dioctadecyl-2,2-bis-(3,5-di-tert-butyl-2-hydroxy-benzyl)-malonat; sterisch gehinderte Hydroxybenzyl-Aromaten, z. B. 1,3,5-Tris-(3,5-di-tert-buty)-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol; sterisch gehinderte phenolische Triazinverbindungen, z. B. 2,4-Bis-octylmercapto-6(3,5-di-tert-butyl-4-hydroxyanilino)-1,3,5-triazin; sterisch gehinderte phenolische Benzylphosphonate, z. B. Dimethyl-2,5-di-tert-butyl-4-hydroxybenzylphosphonat; N-(3,5-di-tert-butyl-4-hydroxyphenyl)-carbaminsäurealkylester; Ester der β-(3.5-Di-tert-butyl-4-hydroxyphenyl)-propionsäure mit ein- oder mehr-wertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehr-wertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin oder N,N'-Bis-(3,5-di-tert-butyl-4-hydroxyphenylpropionyl)-hydrazin.

Bei den erfindungsgemäß als Komponente H zugesetzten organischen Phosphiten und/oder organischen Phosphoniten handelt es sich um an sich bekannte Co-Stabilisatoren für Antioxidantien.

Organische Phosphite haben die allgemeine Formel P(OR)₃, worin R einwertige organische Reste sind.

Organische Phosphonite haben die allgemeine Formel PR'(OR)₂, worin R und R' einwertige organische Reste sind.

Beispiele für geeignete organische Phosphite sind Triarylphosphite, Diarylalkylphosphite, Aryldialkylphosphite, Trialkylphosphite
Beispiele für Triarylphosphite sind Triphenylphosphite, insbesondere Tris-(nonylphenyl)phosphit oder Tris(2,4-di-tert-butylphenyl)phosphit.

Beispiele für Diarylalkylphosphite sind Diphenylalkylphosphite, insbesondere Bis-(2,4-di-tert-butyl-6-methylphenyl)methylphosphit oder Bis(2,4-di-tert-butyl-6-methylphenyl)ethylphosphit.

Beispiele für Aryldialkylphosphite sind Phenyldialkylphosphite.

Beispiele für Trialkylphosphite sind C₁₂-C₁₈-Trialkylphosphite, insbesondere Trilaurylphosphit oder Trioctadecylphosphit.

Beispiele für weitere geeignete organische Phosphite sind Pentaerythritdiphosphite, wie Distearylpentaerythritdiphosphit, Diisodecylpentaerythritdiphosphit, Bis(2,4-di-tert-butylphenyl)pentaerythritdiphosphit, Bis(2,6-di-tert-butyl-4-methylphenyl)pentaerythritdiphosphit, Diisodecyloxypentaerythritdiphosphit, Bis-(2,4-di-tert-butyl-6-methylphenyl)pentaerythritdiphosphit oder Bis-(2,4,6-tris(tert-butylphenyl))pentaerythritdiphosphit.

Weitere geeignete Organophosphite sind Tristearylsorbittriphosphit, 2,2',2"-Nitrilo-[triethyl-tris(3,3',5,5'-tetra-tert-butyl-1,1'-biphenyl-2,2'-diyl)phosphit] oder 2-Ethylhexyl-(3,3',5,5'-tetra-tert-butyl-1,1'-biphenyl-2,2'-diyl)-phosphit.

Bevorzugt handelt es sich bei den erfindungsgemäß als Komponente H eingesetzten organischen Phosphoniten um solche der Formel IV

R₄-[P(OR₅)₂]ₚ (IV)

wobei
R₄ ein ein- oder mehrwertiger aliphatischer, aromatischer oder heteroaromatischer organischer Rest ist und
R₅ eine Struktur der Formel (V) 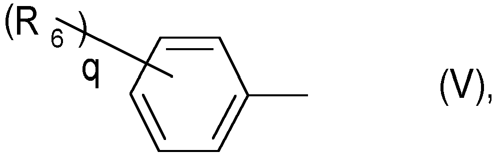
ist oder die beiden Reste R₅ eine verbrückende Gruppe der Struktur (VI) bilden 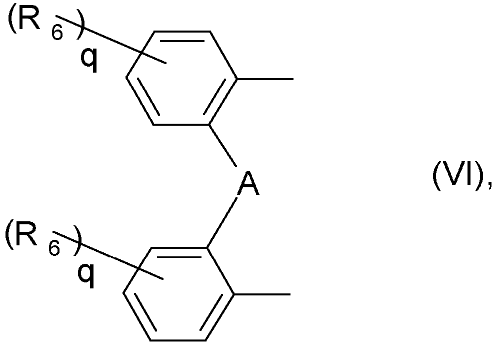 worin
   A eine direkte Bindung, O, S, lineares oder verzweigtes C₁₋₁₈-Alkylen, lineares oder verzweigtes C₁₋₁₈-Alkyliden,
   R₆ unabhängig voneinander lineares oder verzweigtes C₁₋₁₂-Alkyl, lineares oder verzweigtes C₁₋₁₂-Alkoxy und/oder C₅₋₁₂-Cycloalkyl bedeuten,
   q 0 bis 5, und
   p 1 bis 4 bedeutet.

Bevorzugt werden als Komponente H Phosphonite der Formel IV eingesetzt, worin Rest R₄ lineares oder verzweigtes C₄₋₁₈-Alkyl, lineares oder verzweigtes C₄₋₁₈-Alkylen, C₅₋₁₂-Cycloalkyl, C₅₋₁₂-Cycloalkylen, C₆₋₂₄-Aryl bzw. -Heteroaryl, C₆₋₂₄-Arylen bzw. -Heteroarylen ist, welche gegebenenfalls auch weiter substituiert sein können, R₅ Reste der Formel (V) oder (VI) sind, R₆ unabhängig voneinander lineares oder verzweigtes C₁₋₈-Alkyl, lineares oder verzweigtes C₁₋₈-Alkoxy oder Cyclohexyl darstellen, A eine direkte Bindung, O, lineares oder verzweigtes C₁₋₈-Alkylen, lineares oder verzweigtes C₁₋₈-Alkyliden bedeutet, q 0 bis 3 ist, und p 1 bis 3 ist.

Besonders bevorzugt werden als Komponente H Phosphonite der Formel IV eingesetzt, worin Rest R₄ Cyclohexyl, Phenyl, Phenylen, Biphenyl oder Biphenylen darstellt, R₅ Reste der Formeln V oder VI bedeuten, worin R₆ unabhängig voneinander lineares oder verzweigtes C₁₋₈-Alkyl, lineares oder verzweigtes C₁₋₈-Alkoxy oder Cyclohexyl bedeuten, A eine direkte Bindung, O oder lineares oder verzweigtes C₁₋₆-Alkyliden ist, q 1 bis 3 ist, und p 1 oder 2 ist.

Besonders bevorzugte Komponenten H sind Verbindungen, die, basierend auf obigen Definitionen, durch eine Friedel-Crafts-Reaktion eines Aromaten oder Heteroaromaten, wie Benzol, Biphenyl- oder Diphenylether mit Phosphortrihalogeniden, bevorzugt Phosphortrichlorid, in Gegenwart eines Friedel-Crafts-Katalysators, wie Aluminiumchlorid, Zinkchlorid oder Eisenchlorid sowie nachfolgender Reaktion mit den der Rete der Formeln V oder VI zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von organischen Phosphoniten sind wiederum die Verbindungen der nachstehenden Formeln bevorzugt: 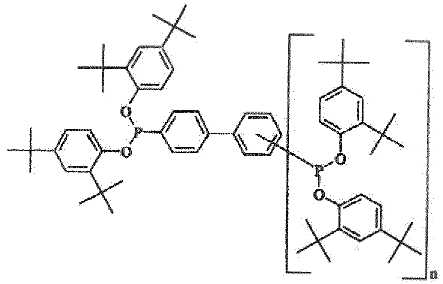 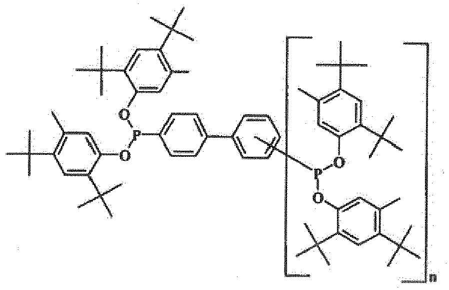 wobei n 0 oder 1 betragen kann und diese Gemische optional weiterhin noch Anteile der nachstehenden Verbindungen enthalten können:

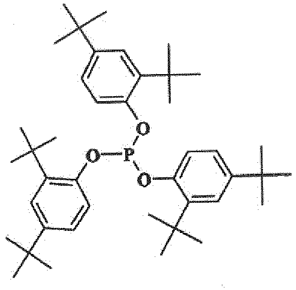

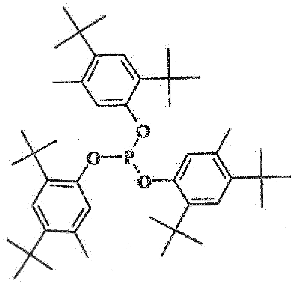

Ganz besonders bevorzugte Komponenten H ist sind 1,1-Biphenyl-4,4'-diylbisphosphonite und davon besonders Tetrakis(2,4-di-tert-butylphenyl)-[1,1-biphenyl]-4,4'-diylbisphosphonit (P-EPQ).

Besonders bevorzugt wird als Komponente G N, N'-Bis[3-(3',5'-di-tert-butyl-4'-hydroxyphenyl)propionyl]-hexamethylendiamin (z. B. Irganox^{®} 1098, BASF) und als Komponente H Tris(2,4-ditert-butylphenyl)phosphit (z. B. Irgaphos^{®} 168, BASF) eingesetzt.

Besonders bevorzugt wird als Komponente G N, N'-Bis[3-(3',5'-di-tert-butyl-4'-hydroxyphenyl)propionyl]-hexamethylendiamin (z. B. Irganox^{®} 1098, BASF) und als Komponente H Tetrakis(2,4-di-tert-butylphenyl)-[1,1-biphenyl]-4,4'-diylbisphosphonit (z. B. Sandostab^{®} P-EPQ, Clariant) eingesetzt.

Die erfindungsgemäßen Polyamidzusammensetzungen können als Komponente J noch weitere Additive enthalten. Bevorzugte Komponenten J im Sinne der vorliegenden Erfindung sind weitere Antioxidantien, welche keine sterisch gehinderten Phenole sind, UV-Stabilisatoren, Gammastrahlenstabilisatoren, Hydrolysestabilisatoren, Co-Stabilisatoren für Antioxidantien, welche keine organischen Phosphite sind, Antistatika, Emulgatoren, Nukleierungsmittel, Weichmacher, Verarbeitungshilfsmittel, Schlagzähmodifikatoren, Farbstoffe, Pigmente und/oder weitere Flammschutzmittel, die sich von Komponenten C, D, E, F und I unterscheiden.

Hierzu gehören insbesondere Phosphate, wie etwa Melamin-Poly(Metallphosphate). Bevorzugte Metalle hierfür sind die Elemente der 2. Hauptgruppe, der 3. Hauptgruppe, der 2. Nebengruppe, der 4. Nebengruppe und der Nebengruppe VIIIa des Periodensystems sowie Cer und/oder Lanthan.

Melamin-Poly(Metallphosphate) sind bevorzugt Melamin-Poly(Zinkphosphate), Melamin-Poly(Magnsiumphosphate) und/oder Melamin-Poly(Calciumphosphate).

Bevorzugt sind (Melamin)₂Mg(HPO₄)₂, (Melamin)₂Ca(HPO₄)₂, (Melamin)₂Zn(HPO4)₂, (Melamin)₃Al(HPO₄)₃, (Melamin)₂Mg(P₂O₇), (Melamin)₂Ca(P₂O₇), (Melamin)₂Zn(P₂O₇), (Melamin)₃Al(P₂O₇)_{3/2}.

Bevorzugt sind Melamin-Poly(Metallphosphate), die bekannt sind als Hydrogenphosphato- oder Pyrophosphato-Metallate mit Komplex-Anionen, die ein vier- oder sechsbindiges Metallatom als Koordinationszentrum mit zweizähnigen Hydrogenphosphat- oder Pyrophosphat-Liganden aufweisen.

Bevorzugt sind auch Melamin-interkalierte Aluminium-, Zink- oder MagnesiumSalze von kondensierten Phosphaten, ganz besonders bevorzugt sind Bis-Melamin-zinko-diphosphat und/oder Bis-Melamin-alumotriphosphat.

Bevorzugt sind weiterhin Salze der Elemente der 2. Hauptgruppe, der 3. Hauptgruppe, der 2. Nebengruppe, der 4. Nebengruppe und der Nebengruppe VIIIa des Periodensystems sowie von Cer und/oder Lanthan mit Anionen der Oxosäuren der fünften Hauptgruppe (Phosphate, Pyrophosphate und Polyphosphate).

Bevorzugt sind Aluminiumphosphate, Aluminum monophosphate; Aluminumorthophosphate (AlPO₄), Aluminumhydrogenphosphat (Al₂(HPO₄)₃) und/oder Aluminiumdihydrogenphosphat.

Bevorzugt sind auch Calciumphosphat, Zinkphosphat, Titanphosphat und/oder Eisenphosphat.

Bevorzugt sind Calciumhydrogenphosphat, Calciumhydrogenphosphatdihydrat, Magnesiumhydrogenphosphat, Titaniumhydrogenphosphat (TIHC) und/oder Zinkhydrogenphosphat.

Bevorzugt sind Aluminiumdihydrogenphosphat, Magnesiumdihydrogenphosphat, Calciumdihydrogenphosphat, Zinkdihydrogenphosphat, Zinkdihydrogenphosphat dihydrat und/oder Aluminumdihydrogenphosphat.

Besonders bevorzugt sind Calciumpyrophosphat,
Calciumdihydrogenpyrophosphat, Magnesiumpyrophosphat, Zinkpyrophosphat und/oder Aluminiumpyrophosphat.

Die vorgenannten sowie andere und ähnliche Phosphate werden beispielsweise durch die Firma J.M. Huber Corporation, USA, unter Safire^{®} Products angeboten, hierzu gehören etwa die Typen APP Type II, AMPP, MPP, MPyP, PiPyP. PPaz, Safire^{®} 400, Safire^{®} 600, EDAP und andere.

Weitere Phosphate sind beispielsweise in der JP-A-2004204194, der DE-A-102007036465 und der EP-A-3133112 genannt und gehören ausdrücklich zu den einsetzbaren Komponenten I.

Die weiteren Additive sind als Zusätze zu Polyamidzusammensetzungen an sich bekannt und können alleine oder in Mischung oder in Form von Masterbatches eingesetzt werden.

Die vorgenannten Komponenten A, B, C, D, E, F, G, H und gegebenenfalls I und/oder J können in den verschiedensten Kombinationen zur erfindungsgemäßen flammgeschützten Polyamidzusammensetzung verarbeitet werden. So ist es möglich, bereits zu Beginn oder am Ende der Polykondensation oder in einem folgenden Compoundierprozess die Komponenten in die Polyamidschmelze einzumischen. Weiterhin gibt es Verarbeitungsprozesse bei denen einzelne Komponenten erst später zugefügt werden. Dies wird insbesondere beim Einsatz von Pigment- oder Additivmasterbatches praktiziert. Außerdem besteht die Möglichkeit, insbesondere pulverförmige Komponenten auf das durch den Trocknungsprozess eventuell warme Polymergranulat aufzutrommeln.

Auch können zwei oder mehrere der Komponenten der erfindungsgemäßen Polyamidzusammensetzungen vor dem Einbringen in die Polyamidmatrix durch Vermischen kombiniert werden. Dabei können herkömmliche Mischaggregate eingesetzt werden, in denen die Komponenten in einem geeigneten Mischer, z. B. 0,01 bis 10 Stunden bei 0 bis 300 °C gemischt werden.

Aus zwei oder mehreren der Komponenten der erfindungsgemäßen Polyamidzusammensetzungen können auch Granulate hergestellt werden, die anschließend in die Polyamidmatrix eingebracht werden können.

Dazu können zwei oder mehr Komponenten der erfindungsgemäßen Polyamidzusammensetzung mit Granulierhilfsmittel und/oder Bindemittel in einem geeigneten Mischer oder einem Granulierteller zu Granulaten verarbeitet werden.

Das zunächst entstehende Rohprodukt kann in einem geeigneten Trockner getrocknet beziehungsweise zum weiteren Kornaufbau getempert werden.

Die erfindungsgemäße Polyamidzusammensetzung oder zwei oder mehrere Komponenten davon kann in einer Ausführungsform durch Rollkompaktierung hergestellt werden.

Die erfindungsgemäße Polyamidzusammensetzung oder zwei oder mehrere Komponenten davon kann in einer Ausführungsform dadurch hergestellt werden, dass die Inhaltsstoffe gemischt, stranggepresst, abgeschlagen (bzw. gegebenenfalls gebrochen und klassiert) und getrocknet (und gegebenenfalls gecoated) werden.

Die erfindungsgemäße Polyamidzusammensetzung oder zwei oder mehrere Komponenten davon kann in einer Ausführungsform durch Sprühgranulierung hergestellt werden.

Die erfindungsgemäße flammgeschützte Polymerformmasse liegt bevorzugt in Granulatform, z. B. als Extrudat oder als Compound, vor. Das Granulat hat bevorzugt Zylinderform mit kreisförmiger, elliptischer oder unregelmäßiger Grundfläche, Kugelform, Kissenform, Würfelform, Quaderform, Prismenform.

Typische Längen-zu-Durchmesser-Verhältnis des Granulates betragen 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm.

Gegenstand der Erfindung sind auch Formteile hergestellt aus der oben beschriebenen flammhemmenden Polyamidzusammensetzung enthaltend die Komponenten A, B, C, D, E, F, G und H und gegebenenfalls die Komponenten I und/oder J.

Bei den erfindungsgemäßen Formteilen kann es sich um beliebige Ausformungen handeln. Beispiele dafür sind Fasern, Folien oder Formkörper, erhältlich aus den erfindungsgemäßen flammgeschützten Polyamidformmassen durch beliebige Formverfahren, insbesondere durch Spritzguss oder Extrusion.

Die Herstellung der erfindungsgemäßen flammgeschützten Polyamid-Formkörper kann durch beliebige Formverfahren erfolgen. Beispiele dafür sind Spritzgießen, Pressen, Schaumspritzgießen, Gasinnendruck-Spritzgießen, Blasformen, Foliengießen, Kalandern, Laminieren oder Beschichten bei höheren Temperaturen mit der flammgeschützten Polyamid-Formmasse.

Bei den Formteilen handelt es sich vorzugsweise sich um Spritzgussteile oder um Extrusionsteile.

Die erfindungsgemäßen flammgeschützten Polyamidzusammensetzungen eignen sich zur Herstellung von Fasern, Folien und Formkörpern, insbesondere für Anwendungen im Elektro- und Elektronikbereich.

Die Erfindung betrifft bevorzugt die Verwendung der erfindungsgemäßen flammgeschützten Polyamidzusammensetzungen in oder für Steckverbinder, stromberührten Teilen in Stromverteilern (FI-Schutz), Platinen, Vergussmassen, Stromsteckern, Schutzschaltern, Lampengehäusen, LED Gehäusen, Kondensatorgehäusen, Spulenkörpern und Ventilatoren, Schutzkontakten, Steckern, in/auf Platinen, Gehäusen für Stecker, Kabeln, flexiblen Leiterplatten, Ladekabeln für Handys, Motorabdeckungen oder Textilbeschichtungen.

Die Erfindung betrifft ebenfalls bevorzugt die Verwendung der erfindungsgemäßen flammgeschützten Polyamidzusammensetzungen zur Herstellung von Formkörpern in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Die Wandstärke der erfindungsgemäßen Formkörper kann typischerweise bis zu 10 mm betragen. Besonders geeignet sind Formkörper mit weniger als 1,5 mm Wandstärke, mehr bevorzugt von weniger als 1 mm Wandstärke und besonders bevorzugt von weniger als 0,5 mm Wandstärke.

Die nachfolgenden Beispiele erläutern die Erfindung ohne diese zu begrenzen.

### 1. Eingesetzte Komponenten

Handelsübliche Polyamide (Komponente A):
Polyamid 6.6 (PA 6.6-GV; Schmelzbereich von 255-260 °C): Ultramid^{®} A27 (BASF)
Polyamid 6 (Schmelzbereich von 217-222 °C): Durethan^{®} B29 (Lanxess)
Polyamid 6T/6.6 (Schmelzbereich von 310-320 °C): Vestamid^{®} HAT plus 1000 (Evonik)

### Glasfasern (Komponente B):

Glasfasern PPG HP 3610 10 µm Durchmesser, 4,5 mm Länge (Fa. PPG, NL),

### Flammschutzmittel FM 1 (Komponenten C, D und E):

Aluminiumsalz der Diethylphosphinsäure enthaltend 0,9 mol % an Aluminium-Ethylbutylphosphinat und 0,5 mol % an Aluminium-Ethylphosphonat hergestellt nach Beispiel 3 der US 7,420,007 B2

### Flammschutzmittel FM 2 (Komponenten C, D und E):

Aluminiumsalz der Diethylphosphinsäure enthaltend 2,7 mol % an Aluminium-Ethylbutylphosphinat und 0,8 mol % an Aluminium-Ethylphosphonat hergestellt nach Beispiel 4 der US 7,420,007 B2

### Flammschutzmittel FM 3 (Komponenten C, D und E):

Aluminiumsalz der Diethylphosphinsäure enthaltend 0,5 mol % an Aluminium-Ethylbutylphosphinat und 0,05 mol % an Aluminium-Ethylphosphonat hergestellt nach dem Verfahren gemäß US 7,420,007 B2

### Flammschutzmittel FM 4 (Komponenten C, D und E):

Aluminiumsalz der Diethylphosphinsäure enthaltend 10 mol % an Aluminium-Ethylbutylphosphinat und 5 mol % an Aluminium-Ethylphosphonat hergestellt nach dem Verfahren gemäß US 7,420,007 B2

### Flammschutzmittel FM 5 (Komponente C):

Aluminiumsalz der Diethylphosphinsäure hergestellt in Analogie zu Beispiel 1 der DE 196 07 635 A1

### Flammschutzmittel FM 6 (Komponenten C und E):

Aluminiumsalz der Diethylphosphinsäure enthaltend 8,8 mol % an Aluminium-Ethylphosphonat

### Flammschutzmittel FM 7 (Komponente I):

Aluminiumsalz der Phosphonsäure hergestellt nach Beispiel 1 der DE 102011120216 A1

### Flammschutzmittel FM 8 (Komponente F):

Melamin-Polyphosphat hergestellt nach dem Beispiel der WO 2000/002869 A1

### Flammschutzmittel FM 9 (nicht erfindungsgemäß):

Melamin-Polyphosphat mit einem mittleren Kondensationsgrad von 18 hergestellt in Analogie zu WO 2000/002869 A1

### Antioxidans (Komponente G):

N, N'-Bis[3-(3',5'-di-tert-butyl-4'-hydroxyphenyl)propionyl]-hexamethylendiamin (Irganox^{®} 1098, BASF)

### Co-Stabilisator H 1 (Komponente H):

Tris(2,4-ditert-butylphenyl)phosphit (Irgaphos^{®} 168, BASF)

### Co-Stabilisator H 2 (Komponente H):

Tetrakis(2,4-di-tert-butylphenyl)-[1,1-biphenyl]-4,4'-diylbisphosphonit (Sandostab^{®} P-EPQ, Clariant)

### 2. Herstellung, Verarbeitung und Prüfung von flammhemmenden Polyamid-Formmassen

Die Flammschutzmittelkomponenten wurden in den in den Tabellen angegebenen Verhältnissen mit dem Antioxidans und mit dem Co-Stabilisator vermischt und über den Seiteneinzug eines Doppelschnecken-Extruders (Typ Leistritz ZSE 27/44D) bei Temperaturen von 260 bis 310 °C in PA 6.6 bzw. bei 250 bis 275 °C in PA 6 bzw. bei 310 bis 330 °C in PA 6T/6.6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 320 °C zu Prüfkörpern verarbeitet und anhand des UL 94-Tests (Underwriter Laboratories) auf Flammwidrigkeit geprüft und klassifiziert. Neben der Klassifikation wurde auch die Nachbrennzeit angegeben.

Die Fließfähigkeit der Formmassen wurde durch Ermittlung des Schmelzvolumenindex (MVR) bei 275 °C/2,16 kg bestimmt. Höhere MVR Werte bedeuten bessere Fließfähigkeit im Spritzgussprozess. Ein starker Anstieg des MVR-Wertes kann allerdings auch auf einen Polymerabbau hindeuten.

Der Comparative Tracking Index der Formteile wurde gemäß dem International Electrotechnical Commission Standard IEC-60112/3 ermittelt.

Der Glow Wire Flammability Index (GWFI-Index) wurde nach der Norm IEC-60695-2-12 ermittelt.

Die Farbe des Formteils wurde visuell beurteilt.

Sämtliche Versuche der jeweiligen Serie wurden, falls keine anderen Angaben gemacht wurden, aufgrund der Vergleichbarkeit unter identischen Bedingungen (wie Temperaturprogramme, Schneckengeometrien und Spritzgießparameter) durchgeführt.

Erfindungsgemäße Beispiele 5 und 5a und Vergleichsbeispiele 1-4, 6, 1a, 1b und V1-V8 mit PA 6.6
Die Ergebnisse der Versuche mit PA 6.6-Formmassen sind in den in der nachfolgenden Tabelle 1 aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

**Tabelle 1: PA 6.6 GF 30 Versuchsergebnisse (5 und 5a erfindungsgemäß; 1-4, 6, 1a, 1b und V1-V8 Vergleiche; n.b. = nicht bestimmt)**

| Beispiel Nr. | 1 | 2 | 3 | 4 | 5 | 6 | 1a | 1b | 5a | V1 | V2 | V3 | V4 | V5 | V6 | V7 | V8 |
|---|---|---|---|---|---|---|---|---|---|---|---|---|---|---|---|---|---|
| A: Polyamid 6.6 | 52,8 | 52,2 | 52,2 | 52,8 | 54,78 | 52,8 | 52,8 | 49,8 | 49,8 | 52,8 | 52,8 | 52,8 | 57,8 | 52,8 | 52,9 | 52,9 | 53,0 |
| B: Glasfasern HP3610 | 30 | 30 | 30 | 30 | 30 | 30 | 30 | 30 | 30 | 30 | 30 | 30 | 30 | 30 | 30 | 30 | 30 |
| C+D+E: FM 1 | 12 | - | - | - | - | - | 8 | 16 | - | - | - | - | - | - | - | - | - |
| C+D+E: FM 2 | - | 12 | - | - | 10 | 12 | - | - | 10 | - | - | 12 | 12 | 17 | 12 | 12 | 12 |
| C+D+E: FM 3 | - | - | 12 | - | - | - | - | - | - | - | - | - | - | - | - | - | - |
| C+D+E: FM 4 | - | - | - | 12 | - | - | - | - | - | - | - | - | - | - | - | - | - |
| C: FM5 | - | - | - | - | - | - | - | - | - | 12 | - | - | - | - | - | - | - |
| C+E: FM 6 | - | - | - | - | - | - | - | - | - | - | 12 | - | - | - | - | - | - |
| I: FM 7 | - | - | - | - | 0,02 | - | - | - | 5 | - | - | - | - | - | - | - | - |
| F: FM 8 | 5 | 5 | 5 | 5 | 5 | 5 | 9 | 4 | 5 | 5 | 5 | - | - | - | 5 | 5 | 5 |
| Vergleich: FM 9 | - | - | - | - | - | - | - | - | - | - | - | 5 | - | - | - | - | - |
| G: Antioxidans | 0,1 | 0,7 | 0,1 | 0,1 | 0,1 | 0,1 | 0,1 | 0,1 | 0,1 | 0,1 | 0,1 | 0,1 | 0,1 | 0,1 | 0,1 | - | - |
| H 1: Co-Stabilisator | 0,1 | 0,1 | 0,7 | 0,1 | 0,1 | - | 0,1 | 0,1 | 0,1 | 0,1 | 0,1 | 0,1 | 0,1 | 0,1 | - | 0,1 | - |
| H 2: Co-Stabilisator | - | - | - | - | - | 0,1 | - | - | - | - | - | - | - | - | - | - | - |
| UL94 0,4 mm/Zeit [sek] | V-0/20 | V-0/15 | V-0/35 | V-0/20 | V-0/10 | V-0/15 | V-0/22 | V-0/22 | V-0/4 | V-0/45 | V-0/40 | n.b. | V-2/95 | V-1/80 | V-0/20 | V-0/20 | V-0/20 |
| GWFI [ °C] | 960 | 960 | 960 | 960 | 960 | 960 | 960 | 960 | 960 | 960 | 960 | n.b. | 850 | 900 | 960 | 960 | 960 |
| MVR [cm³/10 min.] | 4 | 3 | 5 | 4 | 3,4 | 2,5 | 3,6 | 3,8 | 3,6 | 6 | 6 | n.b | 6 | 6 | 12 | 6 | 14 |
| Farbe | weiß | weiß | weiß | weiß | weiß | weiß | weiß | weiß | weiß | weiß | weiß | n.b. | weiß | weiß | weiß | gelblich | gelblich |
| CTI [Volt] | 600 | 600 | 600 | 600 | 600 | 600 | 600 | 600 | 600 | 500 | 500 | n.b. | 600 | 600 | 600 | 550 | 500 |

Die nicht erfindungsgemäßen Polyamidzusammensetzungen der Beispiele 1 bis 4, 6, 1a und 1b sind Formmassen, welche die Brandklasse UL 94 V-0 bei 0,4 mm erreichen, gleichzeitig CTI 600 Volt und GWFI 960 °C aufweisen, und keine Verfärbungen zeigen. Der Zusatz von Komponente I in den erfindungsgemäßen Beispielen 5 und 5a führt zu einer nochmaligen Verbesserung des Flammschutzes ausgedrückt durch eine verringerte Nachbrennzeit.

Das Weglassen von Komponenten D und E in Vergleichsbeispiel V1 hatte neben einer verlängerten Nachbrennzeit einen im Vergleich zu den Beispielen 1-4 erhöhten MVR-Wert sowie eine Verringerung des CTI-Wertes zur Folge.

Das Weglassen von Komponente D in Vergleichsbeispiel V2 hatte neben einer verlängerten Nachbrennzeit einen im Vergleich zu den Beispielen 1-4 erhöhten MVR-Wert sowie eine Verringerung des CTI-Wertes zur Folge.

Das Ersetzen von Komponente F durch eine Komponente mit niedrigerem Kondensationsgrad in Vergleichsbeispiel V3 hatte zur Folge, dass der Polyamidstrang bei der Herstellung aufschäumte und keine Messungen vorgenommen werden konnten.

Das Weglassen von Komponente F in Vergleichsbeispiel V4 hatte neben einer im Vergleich zu Beispiel 2 Verschlechterung der Brandschutzklasse einen erhöhten MVR-Wert sowie einen verringerten GWFI-Wert zur Folge.

In Vergleichsbeispiel V5 wurde durch Erhöhung der Konzentration an Komponenten C, D und E im Vergleich zu Beispiel V4 zwar eine Verbesserung der Brandschutzklasse erreicht. Allerdings zeigte diese Polyamidzusammensetzung immer noch eine im Vergleich zu Beispiel 2 geringere Brandschutzklasse sowie einen erhöhten MVR-Wert und einen verringerten GWFI-Wert.

Bei Weglassen der Komponente H in Vergleichsbeispiel V6 wurde im Vergleich zu Beispiel 2 ein deutlich erhöhter MVR-Wert festgestellt.

Bei Weglassen der Komponente G in Vergleichsbeispiel V7 wurde im Vergleich zu Beispiel 2 ein erhöhter MVR-Wert sowie verringerte CTI- und GWFI-Werte ermittelt. Außerdem verfärbte sich der Formkörper bei der Herstellung deutlich.

Bei Weglassen der Komponenten G und H in Vergleichsbeispiel V8 wurde im Vergleich zu Beispiel 2 ein erhöhter MVR-Wert sowie ein verringerter CTI-Wert ermittelt. Außerdem verfärbte sich auch hier der Formkörper bei der Herstellung deutlich.

### Beispiel 11 und Vergleichsbeispiele 7-10, 12 und V9-V16 mit PA 6

Die Ergebnisse der Versuche mit PA 6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

**Tabelle 2: PA 6 GF 30 Versuchsergebnisse (11 erfindungsgemäß; 7-10, 12 und V9-V16 Vergleiche; n.b. = nicht bestimmt)**

| Beispiel Nr. | 7 | 8 | 9 | 10 | 11 | 12 | V9 | V10 | V11 | V12 | V13 | V14 | V15 | V16 |
|---|---|---|---|---|---|---|---|---|---|---|---|---|---|---|
| A: Polyamid 6 | 52,8 | 52,8 | 52,8 | 52,8 | 52,8 | 52,8 | 52,8 | 52,8 | 52,8 | 57,8 | 52,8 | 52,9 | 52,9 | 53,0 |
| B: Glasfasern HP3610 | 30 | 30 | 30 | 30 | 30 | 30 | 30 | 30 | 30 | 30 | 30 | 30 | 30 | 30 |
| C+D+E: FM 1 | 12 | - | - | - | - | - | - | - | - | - | - | - | - | - |
| C+D+E: FM 2 | - | 12 | - | - | 10 | 12 | - | - | 12 | 12 | 17 | 12 | 12 | 12 |
| C+D+E: FM 3 | - | - | 12 | - | - | - | - | - | - | - | - | - | - | - |
| C+D+E: FM 4 | - | - | - | 12 | - | - | - | - | - | - | - | - | - | - |
| C: FM 5 | - | - | - | - | - | - | 12 | - | - | - | - | - | - | - |
| C+E: FM 6 | - | - | - | - | - | - | - | 12 | - | - | - | - | - | - |
| I: FM 7 | - | - | - | - | 2 | - | - | - | - | - | - | - | - | - |
| F: FM 8 | 5 | 5 | 5 | 5 | 5 | 5 | 5 | 5 | - | - | - | 5 | 5 | 5 |
| Vergleich: FM 9 | - | - | - | - | - | - | - | - | 5 | - | - | - | - | - |
| G: Antioxidans | 0,1 | 0,1 | 0,1 | 0,1 | 0,1 | 0,1 | 0,1 | 0,1 | 0,1 | 0,1 | 0,1 | 0,1 | - | - |
| H 1: Co-Stabilisator | 0,1 | 0,1 | 0,1 | 0,1 | 0,1 | - | 0,1 | 0,1 | 0,1 | 0,1 | 0,1 | - | 0,1 | - |
| H 2: Co-Stabilisator | - | - | - | - | - | 0,1 | - | - | - | - | - | - | - | - |
| UL94 0,4 mm/Zeit [sek.] | V-0/26 | V-0/21 | V-0/40 | V-0/25 | V-0/11 | V0/22 | V0/47 | V-0/45 | n.b. | V-2/102 | V-1/87 | V-0/27 | V-0/26 | V-0/27 |
| GWFI [ °C] | 960 | 960 | 960 | 960 | 960 | 960 | 960 | 960 | n.b. | 850 | 900 | 960 | 660 | 560 |
| MVR [cm³/10 min.] | 8 | 7 | 9 | 8 | 7,5 | 7 | 10 | 9 | n.b | 10 | 10 | 16 | 10 | 18 |
| Farbe | weiß | weiß | weiß | weiß | weiß | weiß | weiß | weiß | n.b. | weiß | weiß | weiß | gelblich | gelblich |
| CTI [Volt] | 600 | 600 | 600 | 600 | 600 | 600 | 500 | 500 | n.b. | 600 | 600 | 600 | 550 | 500 |

Die nicht erfindungsgemäßen Polyamidzusammensetzungen der Beispiele 7 bis 10 und 12 sind Formmassen, welche die Brandklasse UL 94 V-0 bei 0,4 mm erreichen, gleichzeitig CTI 600 Volt und GWFI 960 °C aufweisen, und keine Verfärbungen zeigen. Der Zusatz von Komponente I im erfindungsgemäßen Beispiel 11 führt zu einer nochmaligen Verbesserung des Flammschutzes ausgedrückt durch eine verringerte Nachbrennzeit.

Das Weglassen von Komponenten D und E in Vergleichsbeispiel V9 hatte neben einer verlängerten Nachbrennzeit einen im Vergleich zu den Beispielen 7-10 erhöhten MVR-Wert sowie eine Verringerung des CTI-Wertes zur Folge.

Das Weglassen von Komponente D in Vergleichsbeispiel V10 hatte neben einer verlängerten Nachbrennzeit einen im Vergleich zu den Beispielen 7-10 erhöhten MVR-Wert sowie eine Verringerung des CTI-Wertes zur Folge.

Das Ersetzen von Komponente F durch eine Komponente mit niedrigerem Kondensationsgrad in Vergleichsbeispiel V11 hatte zur Folge, dass der Polyamidstrang bei der Herstellung aufschäumte und keine Messungen vorgenommen werden konnten.

Das Weglassen von Komponente F in Vergleichsbeispiel V12 hatte neben einer im Vergleich zu Beispiel 8 Verschlechterung der Brandschutzklasse einen erhöhten MVR-Wert sowie einen verringerten GWFI-Wert zur Folge.

In Vergleichsbeispiel V13 wurde durch Erhöhung der Konzentration an Komponenten C, D und E im Vergleich zu Beispiel V12 zwar eine Verbesserung der Brandschutzklasse erreicht. Allerdings zeigte diese Polyamidzusammensetzung immer noch eine im Vergleich zu Beispiel 8 geringere Brandschutzklasse sowie einen erhöhten MVR-Wert und einen verringerten GWFI-Wert.

Bei Weglassen der Komponente H in Vergleichsbeispiel V14 wurde im Vergleich zu Beispiel 8 ein deutlich erhöhter MVR-Wert festgestellt.

Bei Weglassen der Komponente G in Vergleichsbeispiel V15 wurde im Vergleich zu Beispiel 8 ein erhöhter MVR-Wert sowie verringerte CTI- und GWFI-Werte ermittelt. Außerdem verfärbte sich der Formkörper bei der Herstellung deutlich.

Bei Weglassen der Komponenten G und H in Vergleichsbeispiel V16 wurde im Vergleich zu Beispiel 8 ein erhöhter MVR-Wert sowie ein verringerter CTI-Wert ermittelt. Außerdem verfärbte sich auch hier der Formkörper bei der Herstellung deutlich.

### Beispiel 17 und Vergleichsbeispiele 13-16, 18 und V17-V24 mit PA 6.6/PA6

Die Ergebnisse der Versuche mit PA 6/PA6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

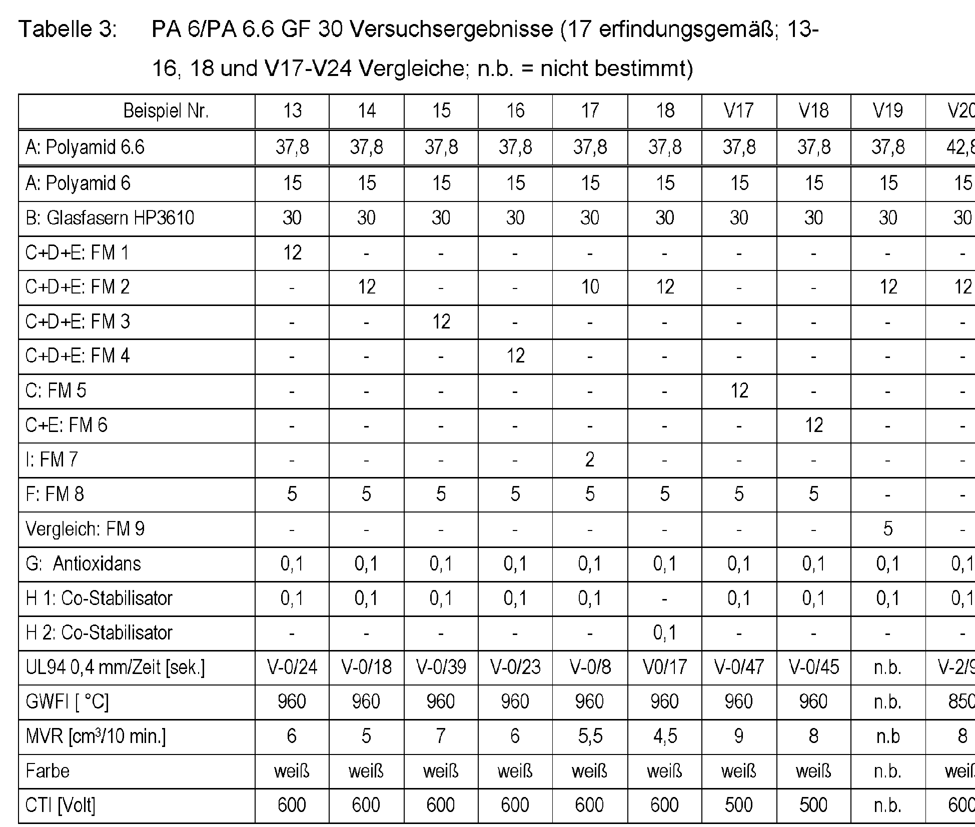

Die nicht erfindungsgemäßen Polyamidzusammensetzungen der Beispiele 13 bis 16 und 18 sind Formmassen, welche die Brandklasse UL 94 V-0 bei 0,4 mm erreichen, gleichzeitig CTI 600 Volt und GWFI 960 °C aufweisen, und keine Verfärbungen zeigen. Der Zusatz von Komponente I im erfindungsgemäßen Beispiel 17 führt zu einer nochmaligen Verbesserung des Flammschutzes ausgedrückt durch eine verringerte Nachbrennzeit.

Das Weglassen von Komponenten D und E in Vergleichsbeispiel V17 hatte neben einer verlängerten Nachbrennzeit einen im Vergleich zu den Beispielen 13-16 erhöhten MVR-Wert sowie eine Verringerung des CTI-Wertes zur Folge.

Das Weglassen von Komponente D in Vergleichsbeispiel V18 hatte neben einer verlängerten Nachbrennzeit einen im Vergleich zu den Beispielen 13-16 erhöhten MVR-Wert sowie eine Verringerung des CTI-Wertes zur Folge.

Das Ersetzen von Komponente F durch eine Komponente mit niedrigerem Kondensationsgrad in Vergleichsbeispiel V19 hatte zur Folge, dass der Polyamidstrang bei der Herstellung aufschäumte und keine Messungen vorgenommen werden konnten.

Das Weglassen von Komponente F in Vergleichsbeispiel V20 hatte neben einer im Vergleich zu Beispiel 14 Verschlechterung der Brandschutzklasse einen erhöhten MVR-Wert sowie einen verringerten GWFI-Wert zur Folge.

In Vergleichsbeispiel V21 wurde durch Erhöhung der Konzentration an Komponenten C, D und E im Vergleich zu Beispiel V20 zwar eine Verbesserung der Brandschutzklasse erreicht. Allerdings zeigte diese Polyamidzusammensetzung immer noch eine im Vergleich zu Beispiel 14 geringere Brandschutzklasse sowie einen erhöhten MVR-Wert und einen verringerten GWFI-Wert.

Bei Weglassen der Komponente H in Vergleichsbeispiel V22 wurde im Vergleich zu Beispiel 14 ein deutlich erhöhter MVR-Wert festgestellt.

Bei Weglassen der Komponente G in Vergleichsbeispiel V23 wurde im Vergleich zu Beispiel 14 ein erhöhter MVR-Wert sowie verringerte CTI- und GWFI-Werte ermittelt. Außerdem verfärbte sich der Formkörper bei der Herstellung deutlich.

Bei Weglassen der Komponenten G und H in Vergleichsbeispiel V24 wurde im Vergleich zu Beispiel 14 ein erhöhter MVR-Wert sowie ein verringerter CTI-Wert ermittelt. Außerdem verfärbte sich auch hier der Formkörper bei der Herstellung deutlich.

### Vergleichsbeispiele V25-V31 mit PA 6T/6.6

Die Ergebnisse der Versuche mit PA 6T/6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

**Tabelle 4: PA 6T/6.6 GF 30 Versuchsergebnisse (n.b. = nicht bestimmt)**

| Beispiel Nr. | V25 | V26 | V27 | V28 | V29 | V31 | V32 |
|---|---|---|---|---|---|---|---|
| A: Polyamid 6T/6.6 | 52,8 | 52,8 | 52,8 | 52,8 | 52,8 | 52,8 | 52,8 |
| B: Glasfasern HP3610 | 30 | 30 | 30 | 30 | 30 | 30 | 30 |
| C+D+E: FM 1 | - | - | 12 | - | - | - | - |
| C+D+E: FM 2 | - | - | - | 12 | - | - | 10 |
| C+D+E: FM 3 | - | - | - | - | 12 | - | - |
| C+D+E: FM 4 | - | - | - | - | - | 12 | - |
| C: FM 5 | 12 | - | - | - | - | - | - |
| C+E: FM 6 | - | 12 | - | - | - | - | - |
| I: FM 7 | - | - | - | - | - | - | 2 |
| F: FM 8 | 5 | 5 | 5 | 5 | 5 | 5 | 5 |
| Vergleich: FM 9 | - | - | - | - | - | - | - |
| G: Antioxidans | 0,1 | 0, | 0,1 | 0,1 | 0,1 | 0,1 | 0,1 |
| H 1: Co-Stabilisator | 0,1 | 0,1 | 0,1 | 0,1 | 0,1 | 0,1 | 0,1 |
| UL 94 0,4 mm / Zeit [sek.] | n.b. | n.b. | n.b. | n.b. | n.b. | n.b. | n.b. |
| GWFI [ °C] | n.b. | n.b. | n.b. | n.b. | n.b. | n.b. | n.b. |
| MVR [cm³/10 min.] | n.b. | n.b. | n.b. | n.b. | n.b. | n.b. | n.b. |
| Farbe | n.b. | n.b. | n.b. | n.b. | n.b. | n.b. | n.b. |
| CTI [Volt] | n.b. | n.b. | n.b. | n.b. | n.b. | n.b. | n.b. |

Aus keiner der PA-Formmassen der Vergleichsbeispiele V25-V32 konnten Prüfkörper hergestellt werden, da sich die PA-Formmassen als nicht verarbeitbar erwiesen. Die Polyamidstränge schäumten bei der Herstellung auf und es konnten keine für die Messungen geeigneten Prüfkörper hergestellt werden.

## Patentansprüche

1. Flammhemmende Polyamidzusammensetzungen, enthaltend
- 25 bis 95 Gew.-% thermoplastisches Polyamid mit einem Schmelzpunkt von kleiner gleich 290 °C, bestimmt mittels Diffential-Scanning-Kalorimetrie (DSC) bei einer Aufheizrate von 10 K/Sekunde, als Komponente A,
- 1 bis 45 Gew.-% Füllstoffe und/oder Verstärkungsstoffe als Komponente B,
- 1 bis 35 Gew.-% Phosphinsäuresalz der Formel (I) als Komponente C 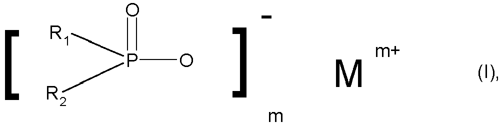
worin R₁ und R₂ Ethyl bedeuten,
M Al, Fe, TiOₚ oder Zn ist,
m 2 bis 3 bedeutet, und
p = (4 - m) / 2 ist
- 0,01 bis 3 Gew.-% einer Verbindung ausgewählt aus der Gruppe der Al-, Fe-, TiOₚ- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- 0,001 bis 1 Gew.-% Phosphonsäuresalz der Formel II als Komponente E 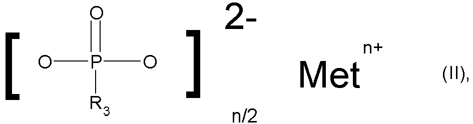
worin R₃ Ethyl bedeutet,
Met Al, Fe, TiO_{q} oder Zn ist,
n 2 bis 3 bedeutet, und
q = (4 - n) /2 ist
- 1 bis 25 Gew.-% Melaminpolyphosphat mit einem mittleren Kondensationsgrad von 20 bis 200 als Komponente F,
- 0,05 bis 5 Gew.-% sterisch gehindertes phenolisches Antioxidans als Komponente G,
- 0,05 bis 5 Gew.-% organisches Phosphit und/oder organisches Phosphonit als Komponente H, und
- 0,005 bis 10 Gew.-% anorganisches Phosphonat als weitere Komponente I, wobei die Prozentangaben sich auf die Gesamtmenge der Polyamidzusammensetzung beziehen.

2. Flammhemmende Polyamidzusammensetzungen nach Anspruch 1, **dadurch gekennzeichnet, dass** M und Met Al bedeuten, m und n 3 sind und dass Komponente D ein Aluminiumsalz ist.

3. Flammhemmende Polyamidzusammensetzungen nach Anspruch 1, **dadurch gekennzeichnet, dass** der Anteil von Komponente A 25 bis 75 Gew.-% beträgt.

4. Flammhemmende Polyamidzusammensetzungen nach Anspruch 1, **dadurch gekennzeichnet, dass** der Anteil von Komponente B 20 bis 40 Gew.-% beträgt.

5. Flammhemmende Polyamidzusammensetzungen nach Anspruch 1, **dadurch gekennzeichnet, dass** der Anteil von Komponente C 5 bis 20 Gew.-% beträgt.

6. Flammhemmende Polyamidzusammensetzungen nach Anspruch 1, **dadurch gekennzeichnet, dass** der Anteil von Komponente D 0,05 bis 1,5 Gew.-% beträgt.

7. Flammhemmende Polyamidzusammensetzungen nach Anspruch 1, **dadurch gekennzeichnet, dass** der Anteil von Komponente E 0,01 bis 0,6 Gew.-% beträgt.

8. Flammhemmende Polyamidzusammensetzungen nach Anspruch 1, **dadurch gekennzeichnet, dass** der Anteil von Komponente F 2 bis 10 Gew.-% beträgt.

9. Flammhemmende Polyamidzusammensetzungen nach Anspruch 1, **dadurch gekennzeichnet, dass** der Anteil von Komponente G 0,5 bis 1 Gew.-% beträgt.

10. Flammhemmende Polyamidzusammensetzungen nach Anspruch 1, **dadurch gekennzeichnet, dass** der Anteil von Komponente H 0,5 bis 1 Gew.-% beträgt.

11. Flammhemmende Polyamidzusammensetzungen nach Anspruch 1, **dadurch gekennzeichnet, dass** der Anteil von Komponente I 0,02 bis 5 Gew.-% beträgt.

12. Flammhemmende Polyamidzusammensetzungen nach Anspruch 1, **dadurch gekennzeichnet, dass** das anorganische Phosphonat eine Verbindung der Formel (III) ist 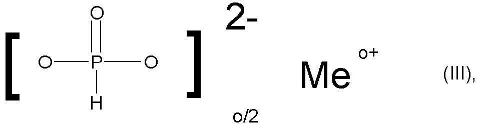
worin Me Fe, TiOᵣ, Zn oder insbesondere Al ist,
o 2 bis 3 bedeutet, und
r = (4 - o) / 2 ist.

13. Flammhemmende Polyamidzusammensetzungen nach mindestens einem der Ansprüche 1 bis 12, **dadurch gekennzeichnet, dass** sie einen Comparative Tracking Index aufweist gemessen nach der International Electrotechnical Commission Standard IEC-60112/3 von größer gleich 500 Volt aufweist.

14. Flammhemmende Polyamidzusammensetzungen nach mindestens einem der Ansprüche 1 bis 13, **dadurch gekennzeichnet, dass** sie eine Bewertung von V0 nach UL-94 von 3.2 mm bis 0,4 mm Dicke erreicht.

15. Flammhemmende Polyamidzusammensetzungen nach mindestens einem der Ansprüche 1 bis 14, **dadurch gekennzeichnet, dass** sie einen Glow Wire Flammability Index nach IEC-60695-2-12 von mindestens 960°C bei 0,75 - 3 mm Dicke aufweist.

16. Flammhemmende Polyamidzusammensetzungen nach mindestens einem der Ansprüche 1 bis 15, **dadurch gekennzeichnet, dass** es sich bei Komponente A um ein oder mehrere thermoplastische Polyamide, ausgewählt ist aus der Gruppe bestehend aus PA 6, PA 6.6, PA 4.6, PA 12, PA 6.10, handelt.

17. Flammhemmende Polyamidzusammensetzungen nach Anspruch 16, **dadurch gekennzeichnet, dass** es sich bei Komponente A um Polyamid 6.6 oder um Polymer-Gemische aus Polyamid 6.6 und Polyamid 6 handelt.

18. Flammhemmende Polyamidzusammensetzungen nach Anspruch 17, **dadurch gekennzeichnet, dass** Komponente A zu mindestens 75 Gew.-% aus Polyamid 6.6 und zu höchstens 25 Gew.-% aus Polyamid 6 besteht.

19. Flammhemmende Polyamidzusammensetzungen nach mindestens einem der Ansprüche 1 bis 18, **dadurch gekennzeichnet, dass** als Komponente B Glasfasern eingesetzt werden.

20. Flammhemmende Polyamidzusammensetzungen nach mindestens einem der Ansprüche 1 bis 19, **dadurch gekennzeichnet, dass** das Melaminpolyphosphat eine Zersetzungstemperatur von größer gleich 320 °C aufweist.

21. Flammhemmende Polyamidzusammensetzungen nach mindestens einem der Ansprüche 1 bis 20, **dadurch gekennzeichnet, dass** Komponente G ausgewählt wird aus der Gruppe bestehend aus alkylierten Monophenolen, sterisch gehinderten Alkylthiomethylphenolen, sterisch gehinderten hydroxylierten Thiodiphenylethern, sterisch gehinderten Alkyliden-Bisphenolen, sterisch gehinderten Benzylphenolen, sterisch gehinderten hydroxybenzylierten Malonaten, sterisch gehinderten Hydroxybenzyl-Aromaten, sterisch gehinderten phenolischen Triazinverbindungen, sterisch gehinderten phenolischen Benzylphosphonaten, N-(3,5-di-tert-butyl-4-hydroxyphenyl)-carbaminsäurealkylestern, Estern der β-(3.5-Di-tert-butyl-4-hydroxyphenyl)-propionsäure mit ein- oder mehr-wertigen Alkoholen, Estern der β-(5-tert-Butyl-4-hydroxy-3-methylphenyl)-propionsäure mit ein- oder mehrwertigen Alkoholen, Estern der β-(3,5-Dicyclohexyl-4-hydroxyphenyl)-propionsäure mit ein- oder mehrwertigen Alkoholen, Estern der 3,5-Di-tert-butyl-4-hydroxyphenylessigsäure mit ein- oder mehrwertigen Alkoholen oder Amiden der β-(3,5-Di-tert-butyl-4-hydroxyphenyl)-propionsäure.

22. Flammhemmende Polyamidzusammensetzungen nach mindestens einem der Ansprüche 1 bis 21, **dadurch gekennzeichnet, dass** Komponente H ein Triarylphosphit ist, insbesondere Tris(2,4-di-tert-butylphenyl)phosphit.

23. Flammhemmende Polyamidzusammensetzungen nach Anspruch 22, **dadurch gekennzeichnet, dass** Komponente G N, N'-Bis[3-(3',5'-di-tert-butyl-4'-hydroxyphenyl)propionyl]-hexamethylendiamin ist und dass Komponente H Tris(2,4-di-tert-butylphenyl)phosphit ist.

24. Flammhemmende Polyamidzusammensetzungen nach mindestens einem der Ansprüche 1 bis 21, **dadurch gekennzeichnet, dass** Komponente H ein 1,1-Biphenyl-4,4'-diylbisphosphonit ist, insbesondere Tetrakis(2,4-di-tert-butylphenyl)-[1,1-biphenyl]-4,4'-diylbisphosphonit.

25. Flammhemmende Polyamidzusammensetzungen nach Anspruch 24, **dadurch gekennzeichnet, dass** Komponente G N, N'-Bis[3-(3',5'-di-tert-butyl-4'-hydroxyphenyl)propionyl]-hexamethylendiamin ist und dass Komponente H Tetrakis(2,4-di-tert-butylphenyl)-[1,1-biphenyl]-4,4'-diylbisphosphonit ist.

26. Flammhemmende Polyamidzusammensetzungen nach mindestens einem der Ansprüche 1 bis 25, **dadurch gekennzeichnet, dass** diese weitere Additive als Komponente J enthält, wobei die weiteren Additive ausgewählt sind aus der Gruppe bestehend aus weiteren Antioxidantien, welche keine sterisch gehinderten Phenole sind, UV-Stabilisatoren, Gammastrahlenstabilisatoren, Hydrolysestabilisatoren, Co-Stabilisatoren für Antioxidantien, welche keine organischen Phosphite sind, Antistatika, Emulgatoren, Nukleierungsmitteln, Weichmachern, Verarbeitungshilfsmitteln, Schlagzähmodifikatoren, Farbstoffen, Pigmenten und/oder weiteren Flammschutzmitteln, die sich von Komponenten C, D, E und F unterscheiden .

27. Verwendung der Polyamidzusammensetzungen nach einem der Ansprüche 1 bis 26 zur Herstellung von Fasern, Folien und Formkörpern, insbesondere für Anwendungen im Elektro- und Elektronikbereich.

## Claims

1. Flame-retardant polyamide compositions comprising
- 25% to 95% by weight of thermoplastic polyamide having a melting point of not more than 290°C, determined by differential scanning calorimetry (DSC) at a heating rate of 10 K/second, as component A,
- 1% to 45 % by weight of fillers and/or reinforcers as component B,
- 1% to 35% by weight of phosphinic salt of the formula (I) as component C 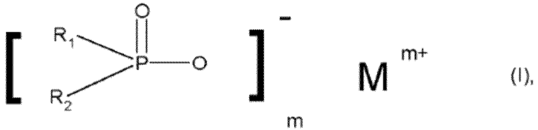
in which R₁ and R₂ are ethyl,
M is Al, Fe, TiOₚ or Zn,
m is 2 to 3, and
p = (4 - m) / 2
- 0.01% to 3% by weight of a compound selected from the group of the Al, Fe, TiOₚ and Zn salts of ethylbutylphosphinic acid, of dibutylphosphinic acid, of ethylhexylphosphinic acid, of butylhexylphosphinic acid and/or of dihexylphosphinic acid as component D,
- 0.001% to 1% by weight of phosphonic salt of the formula II as component E 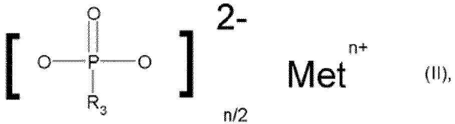
in which R₃ is ethyl,
Met is Al, Fe, TiO_{q} or Zn,
n is 2 to 3, and
q = (4 - n) / 2
- 1% to 25% by weight of melamine polyphosphate having an average degree of condensation of 20 to 200 as component F,
- 0.05% to 5% by weight of sterically hindered phenolic antioxidant as component G,
- 0.05% to 5% by weight of organic phosphite and/or organic phosphonite as component H, and
- 0.005% to 10% by weight of inorganic phosphonate as further component I, where the percentages are based on the total amount of the polyamide composition.

2. Flame-retardant polyamide compositions according to Claim 1, **characterized in that** M and Met are Al, m and n are 3, and component D is an aluminium salt.

3. Flame-retardant polyamide compositions according to Claim 1, **characterized in that** the proportion of component A is 25% to 75% by weight.

4. Flame-retardant polyamide compositions according to Claim 1, **characterized in that** the proportion of component B is 20% to 40% by weight.

5. Flame-retardant polyamide compositions according to Claim 1, **characterized in that** the proportion of component C is 5% to 20% by weight.

6. Flame-retardant polyamide compositions according to Claim 1, **characterized in that** the proportion of component D is 0.05% to 1.5% by weight.

7. Flame-retardant polyamide compositions according to Claim 1, **characterized in that** the proportion of component E is 0.01% to 0.6% by weight.

8. Flame-retardant polyamide compositions according to Claim 1, **characterized in that** the proportion of component F is 2% to 10% by weight.

9. Flame-retardant polyamide compositions according to Claim 1, **characterized in that** the proportion of component G is from 0.5% to 1% by weight.

10. Flame-retardant polyamide compositions according to Claim 1, **characterized in that** the proportion of component H is from 0.5% to 1% by weight.

11. Flame-retardant polyamide compositions according to Claim 1, **characterized in that** the proportion of component I is 0.02% to 5% by weight.

12. Flame-retardant polyamide compositions according to Claim 1, **characterized in that** the inorganic phosphonate is a compound of the formula (III) 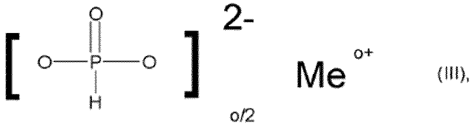
in which Me is Fe, TiOᵣ, Zn or especially Al,
o is 2 to 3, and
r = (4 - o) / 2.

13. Flame-retardant polyamide compositions according to at least one of Claims 1 to 12, **characterized in that** they have a comparative tracking index measured by International Electrotechnical Commission Standard IEC-60112/3 of not less than 500 volts.

14. Flame-retardant polyamide compositions according to at least one of Claims 1 to 13, **characterized in that** they attain a V-0 assessment according to UL94 from thickness 3.2 mm to 0.4 mm.

15. Flame-retardant polyamide compositions according to at least one of Claims 1 to 14, **characterized in that** they have a glow wire flammability index according to IEC-60695-2-12 of not less than 960°C at thickness 0.75-3 mm.

16. Flame-retardant polyamide compositions according to at least one of Claims 1 to 15, **characterized in that** component A is one or more thermoplastic polyamides selected from the group consisting of PA 6, PA 6,6, PA 4,6, PA 12, PA 6,10.

17. Flame-retardant polyamide compositions according to Claim 16, **characterized in that** component A is nylon-6,6 or comprises polymer mixtures of nylon-6,6 and nylon-6.

18. Flame-retardant polyamide compositions according to Claim 17, **characterized in that** component A consists to an extent of at least 75% by weight of nylon-6,6 and to an extent of at most 25% by weight of nylon-6.

19. Flame-retardant polyamide compositions according to at least one of Claims 1 to 18, **characterized in that** glass fibres are used as component B.

20. Flame-retardant polyamide compositions according to at least one of Claims 1 to 19, **characterized in that** the melamine polyphosphate has a breakdown temperature of not less than 320°C.

21. Flame-retardant polyamide compositions according to at least one of Claims 1 to 20, **characterized in that** component G is selected from the group consisting of alkylated monophenols, sterically hindered alkylthiomethylphenols, sterically hindered hydroxylated thiodiphenyl ethers, sterically hindered alkylidenebisphenols, sterically hindered benzylphenols, sterically hindered hydroxybenzylated malonates, sterically hindered hydroxybenzylaromatics, sterically hindered phenolic triazine compounds, sterically hindered phenolic benzyl phosphonates, alkyl N-(3,5-di-tert-butyl-4-hydroxyphenyl)carbamates, esters of β-(3,5-di-tert-butyl-4-hydroxyphenyl)propionic acid with mono- or polyhydric alcohols, esters of β-(5-tert-butyl-4-hydroxy-3-methylphenyl)propionic acid with mono- or polyhydric alcohols, esters of β-(3,5-dicyclohexyl-4-hydroxyphenyl) propionic acid with mono- or polyhydric alcohols, esters of 3,5-di-tert-butyl-4-hydroxyphenylacetic acid with mono- or polyhydric alcohols or amides of β-(3,5-di-tert-butyl-4-hydroxyphenyl)propionic acid.

22. Flame-retardant polyamide compositions according to at least one of Claims 1 to 21, **characterized in that** component H is a triaryl phosphite, especially tris(2,4-di-tert-butylphenyl) phosphite.

23. Flame-retardant polyamide compositions according to Claim 22, **characterized in that** component G is N,N'-bis[3-(3',5'-di-tert-butyl-4'-hydroxyphenyl)propionyl]hexamethylenediamine and **in that** component H is tris(2,4-di-tert-butylphenyl) phosphite.

24. Flame-retardant polyamide compositions according to at least one of Claims 1 to 21, **characterized in that** component H is a 1,1-biphenyl-4,4'-diyl bisphosphonite, especially tetrakis(2,4-di-tert-butylphenyl) [1,1-biphenyl]-4,4'-diyl bisphosphonite.

25. Flame-retardant polyamide compositions according to Claim 24, **characterized in that** component G is N,N'-bis[3-(3',5'-di-tert-butyl-4'-hydroxyphenyl)propionyl]hexamethylenediamine and **in that** component H is tetrakis(2,4-di-tert-butylphenyl) [1,1-biphenyl]-4,4'-diyl bisphosphonite.

26. Flame-retardant polyamide compositions according to at least one of Claims 1 to 25, **characterized in that** it comprises further additives as component J, where the further additives are selected from the group consisting of further antioxidants that are not sterically hindered phenols, UV stabilizers, gamma ray stabilizers, hydrolysis stabilizers, costabilizers for antioxidants that are not organic phosphites, antistats, emulsifiers, nucleating agents, plasticizers, processing auxiliaries, impact modifiers, dyes, pigments and/or further flame retardants other than components C, D, E and F.

27. Use of the polyamide compositions according to any of Claims 1 to 26 for production of fibres, films and shaped bodies, especially for applications in the electricals and electronics sector.

## Revendications

1. Compositions ignifuges de polyamide, contenant
- 25 à 95% en poids d'un polyamide thermoplastique présentant un point de fusion inférieur ou égal à 290°C, déterminé par analyse calorimétrique différentielle (ACD) à une vitesse de montée en température de 10 K/seconde, comme composant A,
- 1 à 45% en poids de charges et/ou de substances de renforcement, comme composant B,
- 1 à 35% en poids de sel de l'acide phosphinique de formule (I), comme composant C 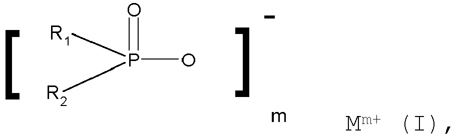
dans laquelle R₁ et R₂ signifient éthyle,
M représente Al, Fe, TiOₚ ou Zn,
m signifie 2 à 3 et
p = (4-m)/2
- 0,01 à 3% en poids d'un composé choisi dans le groupe des sels d'Al, de Fe, de TiOₚ ou de Zn de l'acide éthylbutylphosphinique, de l'acide dibutylphosphinique, de l'acide éthylhexylphosphinique, de l'acide butylhexylphosphinique et/ou de l'acide dihexylphosphinique, comme que composant D
- 0,001 à 1% en poids de sel de l'acide phosphonique de formule II, comme composant E 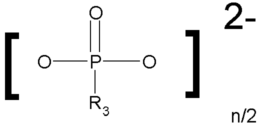 Metⁿ⁺ (II),
dans laquelle R₃ signifie éthyle,
Met représente Al, Fe, TiO_{q} ou Zn,
n signifie 2 à 3 et
q = (4-n)/2
- 1 à 25% en poids de polyphosphate de mélamine présentant un degré moyen de condensation de 20 à 200, comme composant F,
- 0,05 à 5% en poids d'antioxydant phénolique stériquement encombré, comme composant G,
- 0,05 à 5% en poids de phosphite organique et/ou de phosphonite organique, comme composant H, et
- 0,005 à 10% en poids de phosphonate inorganique comme composant supplémentaire I, les indications de pourcentage se rapportant à la quantité totale de la composition de polyamide.

2. Compositions ignifuges de polyamide selon la revendication 1, **caractérisées en ce que** M et Met signifient Al, m et n représentent 3 et **en ce que** le composant D est un sel d'aluminium.

3. Compositions ignifuges de polyamide selon la revendication 1, **caractérisées en ce que** la proportion de composant A représente 25 à 75% en poids.

4. Compositions ignifuges de polyamide selon la revendication 1, **caractérisées en ce que** la proportion de composant B représente 20 à 40% en poids.

5. Compositions ignifuges de polyamide selon la revendication 1, **caractérisées en ce que** la proportion de composant C représente 5 à 20% en poids.

6. Compositions ignifuges de polyamide selon la revendication 1, **caractérisées en ce que** la proportion de composant D représente 0,05 à 1,5% en **poids.**

7. Compositions ignifuges de polyamide selon la revendication 1, **caractérisées en ce que** la proportion de composant E représente 0,01 à 0,6% en **poids.**

8. Compositions ignifuges de polyamide selon la revendication 1, **caractérisées en ce que** la proportion de composant F représente 2 à 10% en **poids.**

9. Compositions ignifuges de polyamide selon la revendication 1, **caractérisées en ce que** la proportion de composant G représente 0,5 à 1% en poids.

10. Compositions ignifuges de polyamide selon la revendication 1, **caractérisées en ce que** la proportion de composant H représente 0,5 à 1% en poids.

11. Compositions ignifuges de polyamide selon la revendication 1, **caractérisées en ce que** la proportion de composant I représente 0,02 à 5% en poids.

12. Compositions ignifuges de polyamide selon la revendication 1, **caractérisées en ce que** le phosphonate inorganique est un composé de formule (III) 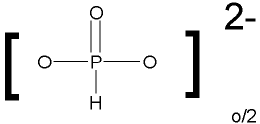 Me°⁺ (III),
dans laquelle Me représente Fe, TiOᵣ, Zn ou en particulier Al,
o signifie 2 à 3 et
r = (4-o)/2.

13. Compositions ignifuges de polyamide selon au moins l'une des revendications 1 à 12, **caractérisées en ce qu'**elles présentent un indice de résistance au cheminement, mesuré selon la norme de la Commission électrotechnique internationale CEI-60112/3, supérieur ou égal à 500 Volts.

14. Compositions ignifuges de polyamide selon au moins l'une des revendications 1 à 13, **caractérisées en ce qu'**elles atteignent un classement de V0 selon UL-94 pour une épaisseur de 3,2 mm à 0,4 mm.

15. Compositions ignifuges de polyamide selon au moins l'une des revendications 1 à 14, **caractérisées en ce qu'**elles présentent un indice d'inflammabilité au fil incandescent selon la norme CEI-60695-2-12 d'au moins 960°C pour une épaisseur de 0,75-3 mm.

16. Compositions ignifuges de polyamide selon au moins l'une des revendications 1 à 15, **caractérisées en ce qu'**il s'agit, pour le composant A, d'un ou de plusieurs polyamides thermoplastiques, choisis dans le groupe constitué par PA 6, PA 6.6, PA 4.6, PA 12, PA 6.10.

17. Compositions ignifuges de polyamide selon la revendication 16, **caractérisées en ce qu'**il s'agit, pour le composant A, de polyamide 6.6 ou de mélanges polymères de polyamide 6.6 et de polyamide 6.

18. Compositions ignifuges de polyamide selon la revendication 17, **caractérisées en ce que** le composant A est constitué à raison d'au moins 75% en poids de polyamide 6.6 et d'au plus 25% en poids de polyamide 6.

19. Compositions ignifuges de polyamide selon au moins l'une des revendications 1 à 18, **caractérisées en ce que** des fibres de verre sont utilisées comme composant B.

20. Compositions ignifuges de polyamide selon au moins l'une des revendications 1 à 19, **caractérisées en ce que** le polyphosphate de mélamine présente une température de décomposition supérieure ou égale à 320°C.

21. Compositions ignifuges de polyamide selon au moins l'une des revendications 1 à 20, **caractérisées en ce que** le composant G est choisi dans le groupe constitué par les monophénols alkylés, les alkylthiométhylphénols stériquement encombrés, les thiodiphényléthers hydroxylés stériquement encombrés, les alkylidènebisphénols stériquement encombrés, les benzylphénols stériquement encombrés, les malonates hydroxybenzylés stériquement encombrés, les hydroxybenzylaromatiques stériquement encombrés, les composés triaziniques phénoliques stériquement encombrés, les benzylphosphonates phénoliques stériquement encombrés, les esters alkyliques de l'acide N-(3,5-di-tert-butyl-4-hydroxyphényl)-carbamique, les esters de l'acide β-(3,5-di-tert-butyl-4-hydroxyphényl)-propionique avec des alcools monovalents ou polyvalents, les esters de l'acide β-(5-tert-butyl-4-hydroxy-3-methylphényl)-propionique avec des alcools monovalents ou polyvalents, les esters de l'acide β-(3,5-dicyclohexyl-4-hydroxyphényl)-propionique avec des alcools monovalents ou polyvalents, les esters de l'acide 3,5-di-tert-butyl-4-hydroxyphénylacétique avec des alcools monovalents ou polyvalents ou les amides de l'acide β-(3,5-di-tert-butyl-4-hydroxyphényl)-propionique.

22. Compositions ignifuges de polyamide selon au moins l'une des revendications 1 à 21, **caractérisées en ce que** le composant H est un phosphite de triaryle, en particulier le phosphite de tris(2,4-di-tert-butylphényle).

23. Compositions ignifuges de polyamide selon la revendication 22, **caractérisées en ce que** le composant G est la N,N'-bis[3-(3',5'-di-tert-butyl-4'-hydroxyphényl)propionyl]-hexaméthylènediamine et **en ce que** le composant H est le phosphite de tris(2,4-di-tert-butylphényle).

24. Compositions ignifuges de polyamide selon au moins l'une des revendications 1 à 21, **caractérisées en ce que** le composant H est un bisphosphonite de 1,1-biphényl-4,4'-diyle, en particulier le bisphosphonite de tétrakis(2,4-di-tert-butylphényl)-[1,1-biphényl]-4,4'-diyle.

25. Compositions ignifuges de polyamide selon la revendication 24, **caractérisées en ce que** le composant G est la N,N'-bis[3-(3',5'-di-tert-butyl-4'-hydroxyphényl)propionyl]-hexaméthylènediamine et **en ce que** le composant H est le bisphosphonite de tétrakis(2,4-di-tert-butylphényl)-[1,1-biphényl]-4,4'-diyle.

26. Compositions ignifuges de polyamide selon au moins l'une des revendications 1 à 25, **caractérisées en ce qu'**elles contiennent des additifs supplémentaires comme composant J, les additifs supplémentaires étant choisis dans le groupe constitué par d'autres antioxydants qui ne sont pas des phénols stériquement encombrés, les stabilisants aux UV, les stabilisants aux rayons gamma, les stabilisants à l'hydrolyse, les costabilisants pour antioxydants qui ne sont pas des phosphites organiques, les antistatiques, les émulsifiants, les agents de nucléation, les plastifiants, les auxiliaires de mise en œuvre, les modifiants choc, les colorants, les pigments et/ou d'autres agents ignifuges, qui sont différents des composants C, D, E et F.

27. Utilisation des compositions de polyamide selon l'une des revendications 1 à 26 pour la fabrication de fibres, de feuilles et de corps moulés, en particulier pour des utilisations dans le domaine électrique et électronique.
